(19) Europäisches Patentamt
European Patent Office
Office européen des brevets

(11) EP 4 269 461 A1

(12) EUROPEAN PATENT APPLICATION
published in accordance with Art. 153(4) EPC

(43) Date of publication:
**01.11.2023 Bulletin 2023/44**

(21) Application number: **21910756.2**

(22) Date of filing: **21.12.2021**

(51) International Patent Classification (IPC):
***C08F 293/00*** (2006.01) ***H01M 4/02*** (2006.01)
***H01M 4/04*** (2006.01) ***H01M 4/13*** (2010.01)
***H01M 4/139*** (2010.01) ***H01M 4/62*** (2006.01)
***H01G 11/38*** (2013.01)

(52) Cooperative Patent Classification (CPC):
**C08F 293/00; H01G 11/38; H01M 4/02; H01M 4/04; H01M 4/13; H01M 4/139; H01M 4/62;** Y02E 60/10

(86) International application number:
**PCT/JP2021/047208**

(87) International publication number:
**WO 2022/138613 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2020 JP 2020217891**

(71) Applicant: **Toagosei Co., Ltd.**
**Minato-ku**
**Tokyo 105-8419 (JP)**

(72) Inventors:
- **SHIBATA, Akitsugu**
  **Nagoya-shi, Aichi 455-0026 (JP)**
- **SAITO, Naohiko**
  **Nagoya-shi, Aichi 455-0026 (JP)**

(74) Representative: **J A Kemp LLP**
**80 Turnmill Street**
**London EC1M 5QU (GB)**

# (54) SECONDARY BATTERY ELECTRODE BINDER AND USE OF SAME

(57) The present invention provides a secondary battery electrode binder that exhibits superior binding capacity as compared to conventional binders and that makes it possible to reduce slurry viscosity, even when the solid concentration of an electrode slurry is high. A secondary battery electrode binder according to the present invention contains a block polymer having a polymer block (A) and a polymer block (B), wherein: the polymer block (A) includes a structural unit derived from an ethylenically unsaturated carboxylic acid monomer; the content of a structural unit derived from an ethylenically unsaturated carboxylic acid monomer in the polymer block (B) is less than 30 mass% (and is different from that in the polymer block (A)) with respect to all the structural units of the polymer block (B); the ratio of the polymer block (A) in the block polymer is 10-90 mass%; and the block polymer does not contain a structural unit derived from a crosslinkable monomer.

EP 4 269 461 A1

## Description

### Technical Field

The present teaching relates to a secondary battery electrode binder, to a secondary battery electrode mixture layer composition, and to a secondary battery electrode and a secondary battery.

### Background Art

Various power storage devices such as nickel-hydrogen secondary batteries, lithium-ion secondary batteries and electric double-layer capacitors are in practical use as secondary batteries. To prepare electrodes for use in such secondary batteries, a composition containing an active material, a binder and the like for forming an electrode mixture layer is coated and dried and the like on a capacitor. In the case of lithium-ion secondary batteries for example, water-based binders containing styrene-butadiene rubber (SBR) latex and carboxymethyl cellulose (CMC) are used as binders in negative electrode mixture layer compositions. Binders containing an acrylic acid-based polymer aqueous solution or aqueous dispersion are known as binders that afford excellent dispersibility and binding ability. Also, solutions of polyvinylidene fluoride (PVDF) in N-methyl-2-pyrrolidone (NMP) are widely used as binders for positive electrode mixture layers.

In recent years, demands for greater energy density, reliability and durability tend to increase as various secondary batteries are used for an expanding range of applications. For example, specifications using silicon-based active materials as negative electrode active materials are becoming more popular for the purpose of increasing the electric capacity of lithium-ion secondary batteries. However, silicon-based active materials are known to undergo large volume changes during charge and discharge, causing peeling, detachment and the like of the electrode mixture layer after repeated use, and leading to decreased battery capacity and reduced cycle characteristics (durability). In order to forestall such problems, it is ordinarily effective to enhance the binding ability of the binder; herein, ongoing research is being conducted that is aimed at enhancing the binding ability of binders, with a view to improving durability.

Binders that utilize the above acrylic acid-based polymers have been proposed as binders that afford good binding ability and elicit the effect of improving durability.

Patent Literature 1 discloses the use of a binder in the form of a polymer obtained through crosslinking of polyacrylic acid by a specific crosslinking agent, so that as a result it becomes possible to provide an electrode having an electrode structure that does not break down even when a silicon-containing active material is used. Patent Literature 2 discloses a lithium battery binder made up of a polymer that contains, as a constituent component, a monomer unit derived from acrylic acid, the polymer being crosslinked by a specific crosslinking agent, and indicates that the binder exhibits a high capacity retention rate even upon repeated charge and discharge.

Patent Literature 3, in which a binder that utilizes a block polymer is addressed with a view to improving performance, for instance, in terms of binding ability, discloses a binder containing a block copolymer having a segment that contains a structural unit of a vinyl monomer having an acid component, and a segment that contains a structural unit of an alkyl (meth)acrylate ester monomer.

### Citation List

Patent Literature 1: WO 2014/065407
Patent Literature 2: WO 2015/163302
Patent Literature 3: Japanese Unexamined Patent Application 2012-204303

### Summary

Although the binders disclosed in Patent Literature 1 to 3 can all impart favorable binding ability, demands for binders with greater binding strength continue to increase as secondary battery performance improves. Secondary battery electrodes are generally obtained through application of an electrode mixture layer composition (hereafter also referred to as "electrode slurry") that contains, for instance, an active material, a binder, and a medium, onto an electrode collector surface, with removal of the medium. It is advantageous herein to increase a solids concentration of the electrode slurry, from the viewpoint of increasing a drying efficiency of the electrode slurry and improving electrode productivity.

However, a higher solids concentration of the electrode slurry ordinarily entails also a higher slurry viscosity, which makes it difficult to ensure good coating properties.

The present teaching, arrived at in the light of the above considerations, provides a secondary battery electrode

binder that brings out better binding ability than conventional ones, and that allows reducing slurry viscosity even in a case where the solids concentration of an electrode slurry is high. Moreover, the teaching provides also a secondary battery electrode mixture layer composition and a secondary battery that are obtained by using that binder.

As a result of diligent research aimed at solving the above problems, the inventors have found that a secondary battery electrode binder containing "a block polymer that has a polymer block (A) containing a structural unit derived from an ethylenically unsaturated carboxylic acid monomer, and a polymer block (B) having a content, of a structural unit derived from an ethylenically unsaturated carboxylic acid monomer, lower than a specific amount, and such that the proportion of the polymer block (A) lies within a specific range", allows slurry viscosity to decrease, even in a case where the solids concentration of an electrode slurry is high, and affords binding ability superior to that of conventional binders, and perfected the present teaching on the basis of the above finding.

The present teaching is as follows.

[1] A secondary battery electrode binder comprising a block polymer that has a polymer block (A) and a polymer block (B), wherein

the polymer block (A) contains a structural unit derived from an ethylenically unsaturated carboxylic acid monomer,
the polymer block (B) contains less than 30 mass% of a structural unit derived from an ethylenically unsaturated carboxylic acid monomer, based on all the structural units of the polymer block (B) (different from the polymer block (A)),
a proportion of the polymer block (A) in the block polymer is from 10 mass% to 90 mass%, and
the block polymer contains no structural unit derived from a crosslinkable monomer.

[2] The secondary battery electrode binder according to [1], wherein the polymer block (A) contains 50 mass% or more of the structural unit derived from the ethylenically unsaturated carboxylic acid monomer, with respect to all the structural units of the polymer block (A).
[3] The secondary battery electrode binder according to [1] or [2], wherein the polymer block (B) contains a structural unit derived from a (meth)acrylate ester monomer.
[4] The secondary battery electrode binder according to any one of [1] to [3], wherein the polymer block (B) contains, with respect to all the structural units thereof, 50 mass% or more of a structural unit derived from an ethylenically unsaturated monomer (hereafter referred to as "monomer (b 1)", excluding monomers classified as an ethylenically unsaturated carboxylic acid monomer) having a solubility of 20 g or less in 100 g of water at 20°C.
[5] The secondary battery electrode binder according to any one of [1] to [4], wherein the block polymer further comprises a polymer block (C) (different from the polymer block (A) and the polymer block (B)).
[6] The secondary battery electrode binder according to [5], wherein the polymer block (C) contains, with respect to all the structural units thereof, 50 mass% or more of a structural unit derived from an ethylenically unsaturated monomer (excluding monomers classified as an ethylenically unsaturated carboxylic acid monomer and the monomer (b 1)) having a solubility of 1.0 g or less in 100 g of water at 20°C.
[7] The secondary battery electrode binder according to any one of [1] to [6], wherein the block polymer is a salt resulting from neutralization of 80 mol% or more of carboxyl groups of the block polymer.
[8] The secondary battery electrode binder according to any one of [1] to [7], wherein a number-average molecular weight of the block polymer is 50,000 or higher, as a polystyrene-basis number-average molecular weight of a methyl esterification product of carboxyl groups included in the block polymer.
[9] A secondary battery electrode mixture layer composition, comprising the secondary battery electrode binder of any one of [1] to [8], an active material, and water.
[10]. A secondary battery electrode, comprising, on a collector surface, a mixture layer formed from the secondary battery electrode mixture layer composition of [9].
[11] A method for producing a block polymer that is used in a secondary battery electrode binder,

the block polymer having a polymer block (A) and a polymer block (B),
the method comprising:

producing the polymer block (A) through polymerization of monomer components that include an ethylenically unsaturated carboxylic acid monomer, by living radical polymerization; and
producing the polymer block (B) (different from the polymer block (A)) through polymerization of a monomer component in the presence of the polymer block (A), with the content of an ethylenically unsaturated carboxylic acid monomer being lower than 30 mass%, wherein
a proportion of the polymer block (A) in the block polymer is from 10 mass% to 90 mass%, and

the block polymer contains no structural unit derived from a crosslinkable monomer.
[12] The method for producing a block polymer according to [11], wherein the living radical polymerization method is a reversible addition-fragmentation chain transfer polymerization method (RAFT method).

## Advantageous Effects of Teaching

The secondary battery electrode binder of the present teaching allows slurry viscosity to decrease, even in a case where the solids concentration of an electrode slurry is high, and affords binding ability superior to that of conventional binders.

## Description of Embodiments

The secondary battery electrode binder of the present teaching contains a block polymer, and can be made into a secondary battery electrode mixture layer composition (hereafter, also referred to as "the composition") by being mixed with an active material and water. The above composition may be in a slurry state amenable for coating a collector therewith, or may be prepared in the state of a wet powder, such that the composition can be pressed against the surface of the collector. The secondary battery electrode of the present teaching can be obtained by forming a mixture layer, in turn formed out of the above composition, on the surface of a collector such as a copper foil or an aluminum foil.
A secondary battery electrode binder, as well as a secondary battery electrode mixture layer composition, a secondary battery electrode and a secondary battery, of the present teaching, and that are obtained using the above binder, will be explained in turn hereafter in detail.
In the present specification, a term "(meth)acrylic" denotes acrylic and/or methacrylic, and a term "(meth)acrylate" denotes acrylate and/or methacrylate. A term "(meth)acryloyl group" denotes an acryloyl group and/or a methacryloyl group.

### 1. Binder

The secondary battery electrode binder of the present teaching contains a block polymer (hereafter also referred to as "the block polymer"). The block polymer has a polymer block (A) containing a structural unit derived from an ethylenically unsaturated carboxylic acid monomer, and a polymer block (B) such that the content of a structural unit derived from an ethylenically unsaturated carboxylic acid monomer is lower than 30 mass%, and wherein the proportion of the polymer block (A) in the block polymer is from 10 mass% to 90 mass%, and the block polymer contains no structural unit derived from a crosslinkable monomer.
Herein, the above crosslinkable monomer denotes for instance polyfunctional polymerizable monomers having two or more polymerizable unsaturated groups, and monomers having self-crosslinkable functional groups such as hydrolyzable silyl groups. The block polymer will be explained in detail below.

<Polymer block (A)>

The polymer block (A) is a polymer block containing a structural unit derived from an ethylenically unsaturated carboxylic acid monomer, and can be obtained for instance through polymerization of a monomer composition that contains an ethylenically unsaturated carboxylic acid monomer. By having such a structural unit, the block polymer has accordingly carboxyl groups, and in consequence adhesiveness to a collector is enhanced, and also a lithium ion desolvation effect and ion conductivity are excellent; an electrode can be obtained as a result that has low resistance and boasts excellent high-rate characteristics.
Examples of ethylenically unsaturated carboxylic acid monomers include (meth)acrylic acid, itaconic acid, crotonic acid, maleic acid and fumaric acid; (meth)acrylamido alkylcarboxylic acids such as (meth)acrylamidohexanoic acid and (meth)acrylamidododecanoic acid; ethylenically unsaturated monomers having a carboxyl group such as monohydroxyethyl succinate (meth)acrylate, ω-carboxycaprolactone mono(meth)acrylate and β-carboxyethyl (meth)acrylate, as well as (partially) alkali neutralized products of these monomers; the foregoing may be used singly as one type thereof or in combinations of two or more types. Of these, a compound having acryloyl groups as polymerizable functional groups is preferred because the rapid polymerization speed produces a polymer with a long primary chain length and a binder with good binding strength, and acrylic acid is especially preferred. A polymer with a high carboxyl group content can be obtained by using acrylic acid as an ethylenically saturated carboxylic acid monomer.
In the polymer block (A), the content of the structural unit derived from an ethylenically unsaturated carboxylic acid monomer, with respect to the all the structural units of the polymer block (A), is not particularly limited, but is for instance 50 mass% or higher, or for instance 60 mass% or higher, or for instance 70 mass% or higher, or for instance 80 mass% or higher, or for instance 90 mass% or higher.

Excellent adhesive to a collector can be easily ensured by incorporating the structural unit derived from an ethylenically unsaturated carboxylic acid monomer, within the above ranges. More preferably, the lower limit of a structural unit derived from (meth)acrylic acid is 50 mass% or higher, since in that case a dispersion stability of the composition improves, and a higher binding strength is achieved.

A structural unit derived from a monomer (hereafter also referred to as "monomer (a)") other than an ethylenically unsaturated carboxylic acid monomer is not particularly limited.

Examples of the monomer (a) include aromatic vinyl monomers, maleimide compounds, (meth)acrylate ester monomers, (meth)acrylamide and derivatives thereof, as well as nitrile group-containing ethylenically unsaturated monomers. The use amount of each of the above monomers used is for instance 50 mass% or lower, and for instance 40 mass% or higher, or for instance 30 mass% or higher, or for instance 20 mass% or higher, or for instance 10 mass% or higher, with respect to the total amount of the monomer that makes up the polymer block (A).

Examples of aromatic vinyl monomers include styrene, α-methylstyrene, vinylnaphthalene and isopropenylnaphthalene; the foregoing may be used singly as one type thereof or in combinations of two or more types.

Maleimide compounds include maleimide and N-substituted maleimide compounds. Examples of N-substituted maleimide compounds include N-alkyl substituted maleimide compounds such as N-methyl maleimide, N-ethyl maleimide, N-n-propyl maleimide, N-isopropyl maleimide, N-n-butyl maleimide, N-isobutyl maleimide, N-tert-butyl maleimide, N-pentyl maleimide, N-hexyl maleimide, N-heptyl maleimide, N-octyl maleimide, N-lauryl maleimide and N-stearyl maleimide; N-cycloalkyl substituted maleimide compounds such as N-cyclopentyl maleimide and N-cyclohexyl maleimide; as well as N-aryl substituted maleimide compounds such as N-phenyl maleimide, N-(4-hydroxyphenyl) maleimide, N-(4-acetylphenyl) maleimide, N-(4-methoxyphenyl) maleimide, N-(4-ethoxyphenyl) maleimide, N-(4-chlorophenyl) maleimide, N-(4-bromophenyl) maleimide and N-benzyl maleimide; the foregoing may be used singly as one type thereof or in combinations of two or more types.

Examples of (meth)acrylate ester monomers include alkyl (meth)acrylate ester compounds such as methyl (meth)acrylate, ethyl (meth)acrylate, butyl (meth)acrylate, isobutyl (meth)acrylate and 2-ethylhexyl (meth)acrylate;

aromatic (meth)acrylate ester compounds such as phenyl (meth)acrylate, phenylmethyl (meth)acrylate, phenylethyl (meth)acrylate and phenoxyethyl (meth)acrylate;
alkoxyalkyl (meth)acrylate ester compounds such as 2-methoxyethyl (meth)acrylate and ethoxyethyl (meth)acrylate; and
hydroxyalkyl (meth)acrylate ester compounds such as hydroxyethyl (meth)acrylate, hydroxypropyl (meth)acrylate and hydroxybutyl (meth)acrylate; the foregoing may be used singly as one type thereof or in combinations of two or more types.

Examples of (meth)acrylamide derivatives include N-alkyl (meth)acrylamide compounds such as isopropyl (meth)acrylamide and t-butyl (meth)acrylamide; N-alkoxyalkyl (meth)acrylamide compounds such as N-n-butoxymethyl (meth)acrylamide and N-isobutoxymethyl meth(acrylamide); and N,N-dialkyl (meth)acrylamide compounds such as dimethyl (meth)acrylamide and diethyl (meth)acrylamide, cyclic (meth) acrylamide compounds such as 4-acryloylmorpholine, and one of these alone or a combination of two or more may be used.

Examples of nitrile group-containing ethylenically unsaturated monomers include (meth)acrylonitrile; cyanoalkyl (meth)acrylate ester compounds such as cyanomethyl (meth)acrylate and cyanoethyl (meth)acrylate; cyano group-containing unsaturated aromatic compounds such as 4-cyanostyrene and 4-cyano-α-methylstyrene; as well as vinylidene cyanide; the foregoing may be used singly as one type thereof or in combinations of two or more types.

A number-average molecular weight (Mn) of the polymer block (A) is not particularly limited, but lies preferably in the range from 1,000 to 1,000,000. If the number-average molecular weight is 1,000 or higher, the polymer block (A) can exhibit a high cohesive force as a binder, and can contribute to improving binding ability in the electrode. Preferably, the number-average molecular weight is 1,000,000 or lower, in terms of making it possible to ensure good flowability and making handling easier for instance at the time of production. The number-average molecular weight of the polymer block (A) is preferably 5,000 or higher, more preferably 8,000 or higher, yet more preferably 10,000 or higher, and still more preferably 20,000 or higher. The upper limit is preferably 800,000 or lower, more preferably 600,000 or lower, yet more preferably 400,000 or lower, still more preferably 200,000 or lower, and even yet more preferably 100,000 or lower.

Preferably, a molecular weight distribution (Mw/Mn) resulting from dividing a value of a weight-average molecular weight (Mw) of the polymer block (A) by a value of the number-average molecular weight (Mn) is 3.0 or less, from the viewpoint of binding ability. More preferably, (Mw/Mn) is 2.5 or less, yet more preferably 2.0 or less, still more preferably 1.5 or less, and even yet more preferably 1.3 or less. The lower limit of the molecular weight distribution (Mw/Mn) is ordinarily 1.0.

Both the Mw and Mn of a methyl esterification product (methyl esterification rate of 100%) of carboxyl groups contained in the polymer block (A) are taken as the Mw and Mn of the polymer block (A), and can be measured by gel permeation chromatography (GPC) using polystyrene as a standard. Conditions explained in the below-described examples can be adopted herein as the details of GPC measurement conditions.

A glass transition temperature (Tg) of the polymer block (A) is preferably 50°C or higher, from the viewpoint of achieving good binding ability. Further, Tg may be for instance 70°C or higher, or 80°C or higher, or 90°C or higher, or 100°C or higher. The upper limit of the Tg is 350°C, due to limitations in terms of constituent monomer units that can be used. Further, the Tg may be for instance 300°C or lower, or 280°C or lower, or 250°C or lower.

In the present specification, the Tg of the polymer block (A) can be determined through analysis of the block polymer by differential scanning calorimetry (DSC). Herein, the Tg of the polymer block (A) is a value based on a structural unit that includes a neutral salt of a carboxyl group derived from an ethylenically unsaturated carboxylic acid monomer, of the polymer block (A).

In a case where a DSC measurement is not possible, the salt of the carboxyl group can be worked out by calculation according to the Fox equation, on the basis of the Tg of respective homopolymers of the monomer that makes up the polymer block. The same is true of other polymer blocks such as the polymer block (B) and a polymer block (C) described below.

<Polymer Block (B)>

Polymer block (B) is a polymer block, different from the polymer block (A), and which contains less than 30 mass% of a structural unit derived from an ethylenically unsaturated carboxylic acid monomer, based on the totality of structural units of the polymer block (B). In terms of making it possible to obtain a secondary battery electrode having excellent binding ability, the content is preferably lower than 25 mass%, more preferably lower than 20 mass%, yet more preferably lower than 15 mass% and even yet more preferably lower than 10 mass%. The polymer block (B) can be obtained for instance by polymerizing a monomer composition containing less than 30 mass% of an ethylenically unsaturated carboxylic acid monomer.

The structural unit derived from an ethylenically unsaturated carboxylic acid monomer of the polymer block (B) may be made up of ethylenically unsaturated carboxylic acid monomers that have not reacted during the production of the polymer block (A); the content of such unreacted monomers is lower than 30 mass%, and a preferred content thereof is identical to the above content.

The polymer block (B) yields relatively hydrophobic segments, such that when the block polymer is used as a binder, the block polymer tends to adsorb readily onto a surface, for instance of a carbon-based active material. As a result, it becomes possible to elicit firm binding between active material particles, and obtain a secondary battery electrode having excellent binding ability.

The monomer that makes up the polymer block (B) is an ethylenically unsaturated carboxylic acid monomer, and/or, another non-crosslinkable ethylenically unsaturated monomer (hereafter also referred to as "monomer (b)") that can be copolymerized therewith. As the monomer (b) there can be used a monomer identical to the monomer (a) described above as the monomer that makes up the polymer block (A); the monomer (b) may be used singly as one type thereof or in combinations of two or more types.

The proportion of the monomer (b) can be set to from 70 mass% to 100 mass% relative to the total amount of the non-crosslinkable monomer that makes up the polymer block (B). The proportion of the monomer (b) may from 75 mass% to 99 mass%, or from 80 mass% to 98 mass%, or from 85 mass% to 96 mass%, or from 90 mass% to 95 mass%. The range of the content of the monomer (b) can be set to an appropriate combination of the above lower limits and upper limits. In a case where the content for the monomer (b) relative to the total amount of the non-crosslinkable monomers is 70 mass% or higher, affinity to an electrolyte solution improves, and an effect of increasing lithium ion conductivity can also be expected to be elicited as a result.

Examples of the monomer (b) include (meth)acrylate ester monomers such as alkyl (meth)acrylate ester compounds, aromatic (meth)acrylate ester compounds, alkoxyalkyl (meth)acrylate ester compounds; styrenes; and aliphatic conjugated diene monomers.

Preferred among the foregoing are alkyl (meth)acrylate ester compounds and aromatic (meth)acrylate ester compounds, and yet more preferably alkyl (meth)acrylate ester compounds, in terms of bringing out excellent binder flexibility. Among alkyl (meth)acrylate ester compounds, more preferable are compounds the homopolymers of which exhibit a glass transition temperature (Tg) of 20°C or lower, from the viewpoint of making it possible to impart flexibility to the binder, and maintain high binding ability at the time of lithium ion intercalation, also when the active material swells or shrinks.

Examples of the alkyl (meth)acrylate ester compound include aliphatic alkyl (meth)acrylates and alicyclic alkyl (meth)acrylates.

Examples of aliphatic alkyl (meth)acrylates include for instance methyl (meth)acrylate, ethyl (meth)acrylate, n-butyl (meth)acrylate, isobutyl (meth)acrylate and 2-ethylhexyl (meth)acrylate; and examples of alicyclic alkyl (meth)acrylates include for instance cyclopentyl (meth)acrylate, cyclohexyl (meth)acrylate, methylcyclohexyl (meth)acrylate, t-butylcyclohexyl (meth)acrylate, cyclodecyl (meth)acrylate, cyclododecyl (meth)acrylate, isobornyl (meth)acrylate, adamantyl (meth)acrylate, dicyclopentenyl (meth)acrylate, dicyclopentenyloxyethyl (meth)acrylate and dicyclopentanyl (meth)acrylate; the foregoing may be used singly as one type thereof or in combinations of two or more types.

Examples of aromatic (meth)acrylate ester compounds include phenyl (meth)acrylate, phenylmethyl (meth)acrylate, phenylethyl (meth)acrylate and phenoxyethyl (meth)acrylate; the foregoing may be used singly as one type thereof or in combinations of two or more types.

Examples of alkoxyalkyl (meth)acrylate ester compounds include 2-methoxyethyl (meth)acrylate and ethoxyethyl (meth)acrylate; the foregoing may be used singly as one type thereof or in combinations of two or more types.

Examples of styrenes include styrene, α-methylstyrene, β-methylstyrene, vinylxylene, vinylnaphthalene, o-methylstyrene, m-methylstyrene, p-methylstyrene, o-ethylstyrene, methylstyrene, p-ethylstyrene, p-n-butylstyrene, p-isobutylstyrene, p-t-butylstyrene, o-methoxystyrene, m-methoxystyrene, p-methoxystyrene, o-chloromethylstyrene, p-chloromethylstyrene, o-chlorostyrene, p-chlorostyrene, o-hydroxystyrene, m-hydroxystyrene, p-hydroxystyrene and divinylbenzene; the foregoing may be used singly as one type thereof or in combinations of two or more types.

Examples of aliphatic conjugated diene monomers include 1,3-butadiene, and also 2-methyl-1,3-butadiene, 2,3-dimethyl-1,3-butadiene and 2-chloro-1,3-butadiene; the foregoing may be used singly as one type thereof or in combinations of two or more types.

Preferably, the monomer (b) is a compound having an acryloyl group, since that case the monomer exhibits a high polymerization rate and accordingly a polymer having a long primary chain length is obtained, which translates into good binding strength of the binder.

A (meth)acrylate ester monomer is preferred as the monomer (b), in terms of achieving excellent binder flexibility. In terms of eliciting excellent affinity to an electrolyte solution, the polymer block (B) particularly preferably contains, in to all the structural units thereof, a structural unit that derives, from among (meth)acrylate ester monomers, from an ethylenically unsaturated monomer (hereafter also referred simply to as "monomer (b 1)", excluding monomers classified as an ethylenically unsaturated carboxylic acid monomer) having a solubility in 100 g of water at 20°C (hereafter also referred simply to as "water solubility") of 20 g or less.

The proportion of the monomer (b 1) is not particularly limited, but is for instance 50 mass% or higher, or for instance 60 mass% or higher, or for instance 70 mass% or higher or for instance 80 mass% or higher, or for instance 90 mass% or higher, relative to the totality of structural units of the polymer block (B).

By containing thus the monomer (b 1) in such a range the block polymer tends to adsorb readily onto a surface, for instance of a carbon-based active material, when the block polymer is used as a binder, given that the polymer block (B) yields relatively hydrophobic segments. As a result, it becomes possible to strongly bind active material particles to each other, and a secondary battery electrode having excellent binding ability can be obtained.

The above water solubility is preferably higher than 1 g, more preferably 2 g or higher, still more preferably 4 g or higher, yet more preferably 8 g or higher, and even still more preferably 10 g or higher.

The number-average molecular weight (Mn) of the polymer block (B) is not particularly limited, but ranges preferably from 1,000 to 1,000,000. If the number-average molecular weight is 1,000 or higher, the polymer block (B) adsorbs onto an active material or the like, and can contribute to improving binding ability in the electrode. Preferably, the number-average molecular weight is 1,000,000 or lower, in terms of making it possible to ensure good flowability and making handling easier for instance at the time of production. The number-average molecular weight of the polymer block (B) is preferably 5,000 or higher, more preferably 8,000 or higher, yet more preferably 10,000 or higher, and still more preferably 20,000 or higher. The upper limit is preferably 800,000 or lower, more preferably 600,000 or lower, yet more preferably 400,000 or lower, still more preferably 200,000 or lower, and even yet more preferably 100,000 or lower.

The glass transition temperature (Tg) of the polymer block (B) is -80°C or higher, from the viewpoint of achieving good binding ability. Further, the Tg may be for instance -70°C or higher, or -60°C or higher, or -50°C or higher, or -40°C or higher, or -30°C or higher, or -20°C or higher. The upper limit of the Tg is 350°C, due to limitations in terms of constituent monomer units that can be used. Further, the Tg may be for instance 300°C or lower, or 200°C or lower, or 150°C or lower, or 150°C or lower, or 100°C or lower, or 50°C or lower.

<Polymer Block (C)>

A polymer block (C) is a polymer block different from the polymer block (A) and the polymer block (B), and can include a structural unit derived from an ethylenically unsaturated carboxylic acid monomer, and/or a monomer (hereafter also referred to as "monomer (c)") similar to the above-described monomer (a) and monomer (b). The polymer block (C) can be obtained for instance through polymerization of a monomer composition that contains an ethylenically unsaturated carboxylic acid monomer and/or a monomer (c); herein the monomer (c) may be used singly as one type thereof or in combinations of two or more types.

Examples of the monomer (c) include (meth)acrylate ester monomers such as alkyl (meth)acrylate ester compounds and aromatic (meth)acrylate ester compounds, as well as styrenes and aliphatic conjugated diene monomers.

Preferred among the foregoing are alkyl (meth)acrylate ester compounds and aromatic (meth)acrylate ester

compounds, and more preferably aromatic (meth)acrylate ester compounds, in terms of achieving excellent adsorption properties towards an active material or the like.

In terms of eliciting excellent adsorption onto an active material or the like, particularly preferably, the polymer block (C) contains, in the totality of structural units thereof, a structural unit derived from an ethylenically unsaturated monomer (hereafter also referred simply to as "monomer (c1)", excluding monomers classified as an ethylenically unsaturated carboxylic acid monomer and monomers classified as monomer (b1)) having a solubility in 100 g of water at 20°C (water solubility) of 1.0 g or less.

Particularly preferred among the above aromatic (meth)acrylate ester compounds are for instance phenoxyethyl acrylate, phenol ethylene oxide-modified (for instance n=2) acrylate, and benzyl acrylate, which are classified as the monomer (c1).

The proportion of the monomer (c1) is not particularly limited, but is for instance 50 mass% or higher, of for instance 60 mass% or higher, of for instance 70 mass% or higher, or for instance 80 mass% or higher, or for instance 90 mass% or higher, relative to the totality of structural units of the polymer block (C).

By containing thus the monomer (c1) in such a range, the block polymer tends to adsorb readily onto a surface, for instance of a carbon-based active material, when the block polymer is used as a binder, given that the polymer block (C) yields relatively hydrophobic segments. As a result it becomes possible to elicit firm binding between active material particles, and obtain a secondary battery electrode having excellent binding ability.

The above water solubility is preferably 0.8 g or lower, more preferably 0.7 g or lower, yet more preferably 0.6 g or lower, still more preferably 0.5 g or lower, and even yet more preferably 0.4 g or lower.

The number-average molecular weight (Mn) of the polymer block (C) is not particularly limited, but ranges preferably from 1,000 to 1,000,000. If the number-average molecular weight is 1,000 or higher, the polymer block (C) adsorbs onto an active material or the like, and can contribute to improving binding ability in the electrode. Preferably, the number-average molecular weight is 1,000,000 or lower, in terms of making it possible to ensure good flowability and making handling easier for instance at the time of production. The number-average molecular weight of the block polymer (C) is preferably 2,000 or higher, more preferably 3,000 or higher, and yet more preferably 5,000 or higher. The upper limit is preferably 500,000 or lower, more preferably 300,000 or lower, and yet more preferably 100,000 or lower.

The glass transition temperature (Tg) of the polymer block (C) is preferably -90°C or higher, from the viewpoint of achieving good binding ability. The Tg may be for instance -80°C or higher, or -70°C or higher, or -60°C or higher, or -50°C or higher, or -40°C or higher, or - 30°C or higher. The upper limit of the Tg is 350°C, due to limitations in terms of constituent monomer units that can be used. Further, the Tg may be for instance 300°C or lower, or 250°C or lower, or 200°C or lower, or 150°C or lower, or 100°C or lower, or 50°C or lower.

<Block Polymer>

The block polymer may have one or more polymer blocks (A) and one or more polymer blocks (B); examples include an (AB) di-block body made up of the polymer block (A) and the polymer block (B), and an (ABA) tri-block body made up of polymer block (A)/polymer block (B)/polymer block (A), or a (BAB) tri-block body.

The block polymer may also have a structure such as (ABC) or (ABCA), including a polymer block (C) other than the polymer block (A) and the polymer block (B).

Among the foregoing, the block polymer has preferably an ABC structure. Such a structure is preferable in terms of achieving both a high cohesive force in the binder and high adsorption properties towards an active material or the like. The above ABC structure may be present throughout the copolymer or in part thereof, and may be for instance a copolymer made up of an ABCA structure. The block polymer may be a mixture of two or more types of block polymers belonging for instance to the above di-block bodies and tri-block bodies. Other than such block polymers, the bock polymer may include a polymer made up only of the polymer block (A) or a polymer made up only of the polymer block (B).

The proportion of the polymer block (A) in the block polymer can be set to range from 10 mass% to 90 mass%, in terms of binding ability. The proportion of the polymer block (A) may be 10 mass% or higher, or 15 mass% or higher, or 20 mass% or higher, or 25 mass% or higher, or 30 mass% or higher. The proportion of the polymer block (A) may be 90 mass% or lower, 80 mass% or lower, 70 mass% or lower, or 60 mass% or lower.

Meanwhile, the proportion of the polymer block (B) in the block polymer can be set to range from 20 mass% to 80 mass%. Good binding ability can be brought out within the above ranges. The proportion of the polymer block (B) may be 10 mass% or higher, or 20 mass% or higher, or 30 mass% or higher, or 40 mass% or higher, or 50 mass% or higher. The proportion of the polymer block (B) may be 90 mass% or lower, or 80 mass% or lower, or 75 mass% or lower, or 70 mass% or lower, or 65 mass% or lower, or 60 mass% or lower, or 55 mass% or lower.

The proportion of the total amount of the polymer block (A) and the polymer block (B) in the block polymer is preferably 60 mass% or higher, more preferably 70 mass% or higher, yet more preferably 80 mass% or higher, and still more preferably 90 mass% or higher. The proportion of the total amount of the polymer block (A) and the polymer block (B) may be 100 mass%.

A mass ratio of the polymer block (A) and the polymer block (B) in the block polymer is not particularly limited, but can be set for instance to 0.1 to 80/20 to 99.9. Good binding ability can be brought out within such a range. The mass ratio may be for instance 0.5 to 70/30 to 99.5, or 1.0 to 50/50 to 99, or 5.0 to 30/70 to 95, or 10 to 30/70 to 99.

The number-average molecular weight (Mn) of the block polymer is not particularly limited, but ranges preferably from 10,000 to 10,000,000. Sufficient performance as a binder can be brought out if the number-average molecular weight is 10,000 or higher. Preferably, the number-average molecular weight is 10,000,000 or lower, in terms of making it possible to ensure good flowability and making handling easier for instance at the time of production. The number-average molecular weight of the block polymer is preferably 20,000 or higher, more preferably 30,000 or higher, yet more preferably 50,000 or higher, still more preferably 75,000 or higher, and even yet more preferably 100,000 or higher. The upper limit is preferably 5,000,000 or lower, more preferably 3,000,000 or lower, yet more preferably 1,000,000, still more preferably 500,000 or lower, and even yet more preferably 300,000 or lower.

A molecular weight distribution (Mw/Mn) resulting from dividing a value of the weight-average molecular weight (Mw) of the block polymer by a value of the number-average molecular weight (Mn) is 3.0 or lower, from the viewpoint of binding ability. The molecular weight distribution (Mw/Mn) is more preferably 2.5 or lower, yet more preferably 2.0 or lower, still more preferably 1.5 or lower, and even yet more preferably 1.3 or lower. The lower limit of the molecular weight distribution (Mw/Mn) is ordinarily 1.0.

The Mw and Mn of a methyl esterification product (methyl esterification rate of 100%) of carboxyl groups contained in the block polymer, and that are taken as the Mw and Mn of the block polymer, can be measured by gel permeation chromatography (GPC) using polystyrene as a standard. Conditions explained in the below-described examples can be adopted herein as the details of GPC measurement conditions.

Preferably, the block polymer is used, in the composition, in the form of a salt resulting from neutralization of acid groups, such as carboxyl groups derived from an ethylenically unsaturated carboxylic acid monomer, to a degree of neutralization of 50 mol% or higher. The above degree of neutralization is more preferably 60 mol% or higher, yet more preferably 70 mol% or higher, still more preferably 80 mol% or higher, even yet more preferably 85 mol% or higher, and particularly preferably 90 mol% or higher. The upper limit of the degree of neutralization is 100 mol%, and may be 98 mol% or lower, or 95 mol% or lower. The range of the degree of neutralization can be an appropriate combination of the above lower limits and upper limits, and may range for instance from 50 mol% to 100 mol%, or from 70 mol% to 100 mol%, or from 80 mol% to 100 mol%. A degree of neutralization of 50 mol% or higher is preferable in terms of achieving good solubility in water and readily bringing out good slurry coating properties. A viscosity of the composition (electrode slurry) that contains the active material and so forth significantly drops if the degree of neutralization is 80 mol% or higher. This is preferable, since an electrode with a smooth surface can be obtained in that case. The above is also preferable in terms of productivity, since the concentration of the composition can be increased, which translates into a smaller amount of solvent that is to be removed by drying.

In this Description, the degree of neutralization can be calculated from the charged values of the monomer having acid groups such as carboxyl groups and the neutralizing agent used for neutralization. The degree of neutralization can be confirmed from the intensity ratio of a peak derived from C=O groups of carboxylic acids and a peak derived from C=O groups of carboxylic acid salts in IR measurement of a powder obtained by drying the crosslinked polymer or salt thereof for 3 hours at 80°C under reduced pressure.

The type of the salt of the block polymer is not particularly limited, and examples include alkali metal salts of for instance lithium, sodium or potassium; alkali earth metal salts such as magnesium salts, calcium salts and barium salts; other metal salts such as aluminum salts; as well as ammonium salts and organic amine salts. Preferred among the foregoing are alkali metal salts and alkaline-earth metal salts, more preferably alkali metal salts, and yet more preferably lithium salts and potassium salts, in terms of not being prone to adversely impact battery characteristics.

<Method for Producing the Block Polymer>

The method for producing the block polymer is not particularly limited, so long as a block polymer is obtained that has the polymer block (A) and the polymer block (B), and known production methods can be resorted to. Examples include methods relying on various controlled polymerization schemes such as living radical polymerization and living anionic polymerization, and methods that involve, coupling to each other polymers that have functional groups. A further method may involve for instance copolymerizing a macromonomer having the polymer block (A) with a monomer that makes up the polymer block (B), to thereby obtain a polymer that has, in the molecule, a structural unit made up of polymer block (A) / (polymer block (B) / the above polymer block (A). Preferred among the foregoing is living radical polymerization, from the viewpoint of ease of operation and applicability to a wide range of monomers.

Any process such as a batch process, a semi-batch process, a continuous tubular polymerization process or a continuous stirred tank process (CSTR) may be resorted to for living radical polymerization. The polymerization scheme can be applied to various implementations, for instance solvent-free bulk polymerization, solvent-based solution polymerization, water-based emulsion polymerization, miniemulsion polymerization or suspension polymerization. Preferred

among the foregoing is aqueous solution polymerization, from the viewpoint of controllability of polymerization and ease of implementation, and in terms of obtaining a block polymer having excellent binding ability.

The type of living radical polymerization method is not particularly limited, and for instance various polymerization methods may be resorted to that include for instance reversible addition-fragmentation chain transfer polymerization (RAFT method), a nitroxy radical method (NMP), atom transfer radical polymerization (ATRP method), a polymerization method (TERP method) that utilizes an organic tellurium compound, a polymerization method (SBRP method) that utilizes an organic antimony compound, a polymerization method (BIRP method) that utilizes an organic bismuth compound, as well as iodine transfer polymerization. Preferred among the foregoing is the RAFT method, from the viewpoint of controllability of polymerization, ease of implementation, and obtaining a block polymer having excellent binding ability.

In the RAFT method, polymerization proceeds as a result of a reversible chain transfer reaction in the presence of a polymerization control agent (RAFT agent) and a free radical polymerization initiator. Examples of RAFT agents include dithioester compounds represented by Formula (1) or salts thereof, trithiocarbonate compounds represented by Formula (2) or salts thereof, dithiocarbamate compounds represented by Formula (3) or salts thereof, and xanthate compounds represented by Formula (4) or salts thereof. A monofunctional RAFT agent having only one active site, or a bifunctional or higher functional RAFT agent, may be used herein.

The use amount of the RAFT agent used is adjusted as appropriate depending for instance on the type of the monomers and the RAFT agent that are used.

[C1]

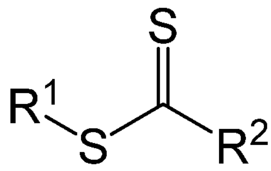

(1)

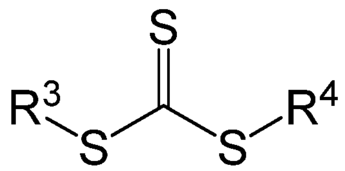

(2)

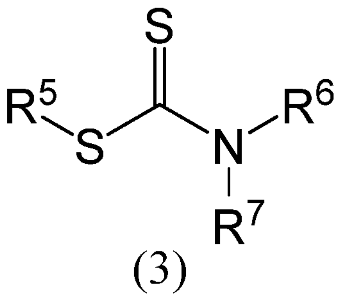

(3)

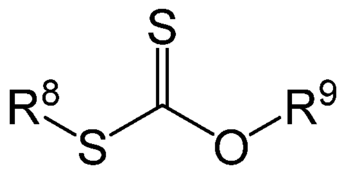

(4)

(In the formula, $R^1$ to $R^9$ represent an optionally substituted alkyl group, an optionally substituted aryl group, an optionally substituted heteroaryl group or an optionally substituted aralkyl group, such that $R^6$ and $R^7$ may be bonded to each other forming a ring together with an adjacent nitrogen atom, the ring being optionally substituted).

Examples of the "alkyl group" of the optionally substituted alkyl group represented by $R^1$ to $R^9$ include for instance a linear or branched C1 to C16 (preferably C1 to C12, more preferably C1 to C6, and particularly preferably C1 to C4) alkyl group. Concrete examples include a methyl group, an ethyl group, an N-propyl group and an isopropyl group. In a case where the alkyl group has a substituent, examples of the substituent include a carboxyl group, an ester group (alkoxycarbonyl group or the like), a cyano group, a hydroxyl group and an alkoxy group. The alkyl group may have 1 to 4 substituents selected from the foregoing substituents.

Examples of the "aryl group" of the optionally substituted aryl group represented by $R^1$ to $R^9$ include for instance monocyclic or bicyclic aryl groups. Concrete examples include a phenyl group, a tolyl group, a xylyl group and a naphthyl group. In a case where the aryl group has a substituent, examples of the substituent include a carboxyl group, an ester group (alkoxycarbonyl group or the like), a cyano group, a hydroxyl group, an alkoxy group and a halogen atom. The aryl group may have 1 to 5 substituents selected from the above substituents.

Examples of the "heteroaryl group" of the optionally substituted heteroaryl group represented by $R^1$ to $R^9$ include for instance a monocyclic or bicyclic heteroaryl group containing a ring-constituting atom in the form of at least one heteroatom selected from the group consisting of an oxygen atom, a nitrogen atom and a sulfur atom. Concrete

examples include a pyridyl group, a pyrimidinyl group and a pyrazinyl group. In a case where the heteroaryl group has a substituent, examples of the substituent include a carboxyl group, an ester group (alkoxycarbonyl group or the like), a cyano group, a hydroxyl group, an alkoxy group and a halogen atom. The heteroaryl group may have 1 to 4 substituents selected from the above substituents.

The "aralkyl group" of the optionally substituted aralkyl group represented by $R^1$ to $R^9$ signifies an alkyl group substituted with an aryl group; examples thereof include for instance a benzyl group and a phenethyl group. In a case where the aralkyl group has a substituent, examples of the substituent include a carboxyl group, an ester group (alkoxycarbonyl group or the like), a cyano group, a hydroxyl group, an alkoxy group and a halogen atom. The aryl group in the aralkyl group may have 1 to 5 substituents selected from the above substituents.

Further, $R^6$ and $R^7$ represented by Formula (3) may be bonded to each other forming a ring together with an adjacent nitrogen atom, the ring being optionally substituted. Examples of the ring include a pyrrolidine ring, a piperidine ring and a morpholine ring. In a case where the ring has a substituent, examples of the substituent include an alkyl group and an oxo group (=O). The ring may have 1 to 3 substituents selected from among the above substituents.

The RAFT agent in aqueous solution polymerization is preferably a water-soluble RAFT agent; examples thereof include a compound, and/or salt thereof, having a thiocarbonylthio group (-CS-S-) and a hydrophilic group (for instance a carboxyl group) in the molecule.

Examples of salts of the compounds represented by Formulae (1) to (4) include alkali metal salts (for instance sodium salts and potassium salts) and ammonium salts in a case where the compound has an acidic group; salts of inorganic acids such as hydrochloric acid and sulfuric acid in a case where the compound has a basic group; as well as organic acid salts of carboxylates (such as acetate salts) and sulfonates (such as p-toluenesulfonate salts).

A compound represented by Formula (2) or a salt thereof is preferable among the above RAFT agents. Herein $R^3$ and $R^4$ are identical or different, and are preferably an optionally substituted alkyl group, and more preferably a C1 to C12 (or C1 to C6) optionally substituted alkyl group having at least one group (in particular 1 to 3 groups) selected from the group consisting of a carboxyl group, an ester group (alkoxycarbonyl group or the like), a cyano group, a hydroxyl group and an alkoxy group, and particularly preferably a C1 to C4 alkyl group optionally having one carboxyl group.

Examples of the compound represented by Formula (2) include the compound represented by Formula (2A) (in the formula, $R^{3A}$ and $R^{4A}$ may be identical or different, and denote an optionally substituted C1 to C6 (in particular C1 to C4) alkylene group having at least one (in particular 1 to 3) groups selected from the group consisting of an ester group (alkoxycarbonyl group or the like), a cyano group, a hydroxyl group and an alkoxy group); preferably, $R^{3A}$ and $R^{4A}$ are a C1 to C3 alkylene group, for instance 2-{[(2-carboxyethyl)sulfanylthiocarbonyl]sulfanyl}propanoic acid or 4-[(2-carboxyethylsulfanylthiocarbonyl)sulfanyl]-4-cyanopentanoic acid.

[C2]

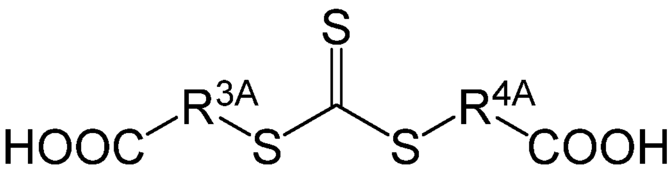

(2A)

The polymerization initiator that is used for polymerization in accordance with the RAFT method may be a known radical polymerization initiator such as an azo compound, an organic peroxide or a persulfate, but preferably the polymerization initiator is an azo compound, since an azo compound is less likely to give rise to side reactions at the time of radical polymerization. Examples of the azo compound include for instance 2,2'-azobisisobutyronitrile, 2,2'-azobis(2,4-dimethylvaleronitrile), 2,2'-azobis(4-methoxy-2,4-dimethylvaleronitrile), dimethyl-2,2'-azobis(2-methylpropionate), 2,2'-azobis(2-methylbutyronitrile), 1,1'-azobis(cyclohexane-1-carbonitrile), 2,2'-azobis[N-(2-propenyl)-2-methylpropionamide], 2,2'-azobis(N-butyl-2-methylpropiomamide), 4,4'-azobis(4-cyanovaleric acid), 2,2'-azobis[2-(2-imidazolin-2-yl)propane], 2,2'-azobis[2-(2-imidazolin-2-yl)propane] dihydrochloride, 2,2'-azobis[2-(-imidazolin-2-yl)propane] disulfate dihydrate, 2,2'-azobis(2-methylpropionamidine) dihydrochloride and 2,2'-azobis[N-(2-carboxyethyl)-2-methylpropionamidine] hydrate. The above radical polymerization initiators may be used singly as only one type thereof, or in combinations of two or more types.

The polymerization initiator in aqueous solution polymerization is preferably a water-soluble polymerization initiator, for instance a compound, and/or a salt thereof or a hydrate thereof, having a hydrophilic group (for instance a carboxyl group); preferred among the foregoing are for instance 4,4'-azobis(4-cyanovaleric acid), 2,2'-azobis[2-(2-imidazolin-2-yl)propane] dihydrochloride, 2,2'-azobis[2-(-imidazolin-2-yl)propane] disulfate dihydrate, 2,2'-azobis(2-methylpropionamidine) dihydrochloride and 2,2'-azobis[N-(2-carboxyethyl)-2-methylpropionamidine] hydrate.

The proportion of use of the radical polymerization initiator is not particularly limited, but preferably the use

amount of the radical polymerization initiator relative to 1 mol of the RAFT agent is set to 0.5 mol or less, more preferably to 0.2 mol or less, in terms of obtaining a polymer having a narrower molecular weight distribution. In terms of stably conducting a polymerization reaction, the lower limit of the use amount of the radical polymerization initiator relative to 1 mol of the RAFT agent is 0.001 mol. Therefore, the use amount of the radical polymerization initiator relative to 1 mol of the RAFT agent ranges preferably from 0.001 mol to 0.5 mol, and more preferably from 0.005 mol to 0.2 mol.

The reaction temperature of the polymerization reaction according to the RAFT method is preferably from 30°C to 120°C, more preferably from 40°C to 110°C, and yet more preferably from 50°C to 100°C. The polymerization reaction can proceed smoothly if the reaction temperature is 30°C or higher. Meanwhile, side reactions can be suppressed, and limitations pertaining to initiators and solvents that can be used are relaxed, if the reaction temperature is 120°C or lower.

The TERP polymerization method is ordinarily a method for polymerizing a water-soluble vinyl-based monomer in the presence of an organic tellurium compound. Refer herein for instance to Chemical Review, 2009, 109, for example p. 5051-5068.

The SBPR polymerization method is ordinarily a method for polymerizing a water-soluble vinyl-based monomer in the presence of an organic antimony compound. Refer herein for instance to Chemical Review, 2009, 109, for example p. 5051-5068.

The BIRP polymerization method polymerization method is ordinarily a method for polymerizing a water-soluble vinyl-based monomer in the presence of an organic bismuth compound. Refer herein for instance to Chemical Review, 2009, 109, for example p. 5051-5068.

Concerning the iodine transfer polymerization method, refer for instance to Chemical Review, 2006, 106, for example p. 3936-3962.

In the present disclosure known polymerization solvents can be used for living radical polymerization. Specifically, aromatic compounds such as benzene, toluene, xylene or anisole; ester compounds such as methyl acetate, ethyl acetate, propyl acetate or butyl acetate; ketone compounds such as acetone or methyl ethyl ketone; as well as dimethylformamide, acetonitrile, dimethylsulfoxide, alcohol or water. Preferably among the foregoing, water is used for aqueous solution polymerization, from the viewpoint of controllability of polymerization, ease of implementation, and obtaining a block polymer excellent in binding ability.

The polymer block (A) may be produced by conducting a polymerization reaction in the presence of a basic compound. The polymerization reaction can be stably carried out, even under conditions of high monomer concentration, by conducting the polymerization reaction in the presence of a basic compound. The monomer concentration may be 13.0 mass% or higher, and is preferably 15.0 mass% or higher, more preferably 17.0 mass% or higher, yet more preferably 19.0 mass% or higher, and still more preferably 20.0 mass% or higher. The monomer concentration is even yet more preferably 22.0 mass% or higher, and even still more preferably 25.0 mass% or higher. Generally, the higher the monomer concentration at the time of polymerization, the higher can be the resulting molecular weight, and thus a polymer having a large primary chain length can be produced in a case where the polymer is a crosslinked polymer.

The maximum value of the monomer concentration differs according to the monomers used, the type of solvent, the polymerization method and the various polymerization conditions and the like, but assuming that the polymerization reaction heat can be removed, the maximum value is generally about 50% in the case of solution polymerization, or about 50% in the case of suspension polymerization, or about 70% in the case of emulsion polymerization.

The basic compound is a so-called alkali compound, and either an inorganic basic compound or an organic basic compound may be used. By performing a polymerization reaction in the presence of a basic compound, it is possible to achieve a stable polymerization reaction even with a high monomer concentration exceeding 13.0 mass% for example. Furthermore, a polymer obtained by polymerization at such a high monomer concentration has excellent binding ability due to having a high molecular weight (long primary chain length).

Examples of inorganic basic compounds include alkali metal hydroxides such as lithium hydroxide, sodium hydroxide and potassium hydroxide, alkali earth metal hydroxides such as calcium hydroxide and magnesium hydroxide, and one or two or more of these may be used.

Examples of organic basic compounds include ammonia and organic amine compounds such as monoethylamine, diethylamine and triethylamine; the foregoing may be used singly as one type thereof or in combinations of two or more types. Preferred among the foregoing are organic amine compounds, in terms of polymerization stability and the binding ability of a binder that contains the obtained polymer or salt thereof.

In this Description, the amount of the basic compound is represented as the molar concentration of the basic compound relative to the ethylenically unsaturated carboxylic acid compound and does not signify the degree of neutralization. That is, the valence of the basic compound is not considered.

The block polymer can be obtained in the form of a powder, resulting from performing for instance a pressure-reduction and/or heating treatment on a reaction solution that contains the block polymer, whereupon the solvent is distilled off. At this time, the polymerization reaction is preferably followed by a washing treatment, for instance by reprecipitation, for the purpose of removing for example unreacted monomers (and salts thereof), before the solvent is distilled off. When the above washing treatment is performed, good performance in terms of binding ability and battery

characteristics can be brought out through removal of residual unreacted monomers of the block polymer.

In the present production method, an alkali compound is added to a dispersion containing the block polymer that is obtained after the polymerization reaction, to neutralize the block polymer (hereafter this is also referred to as "process neutralization"), followed by a drying step, to remove the solvent. Alternatively, a powder of the polymer may be obtained without performing such a process neutralization treatment, after which an alkali compound may be added at the time of preparation of the electrode slurry, to neutralize the polymer (hereafter this is also referred to as "post-neutralization"). Preferred among the foregoing is process neutralization, which tends to yield secondary aggregates that break up more readily.

## 2. Secondary Battery Electrode Mixture Layer Composition

The secondary battery electrode mixture layer composition of the present teaching contains a binder containing the block polymer, as well as an active material and water.

The use amount of the block polymer in the composition is for instance from 0.1 parts by mass to 20 parts by mass relative to 100 parts by mass as the total amount of the active material. The above use amount is for instance from 0.2 parts by mass to 10 parts by mass, or for instance from 0.3 parts by mass to 8 parts by mass, or for instance from 0.4 parts by mass to 5 parts by mass. Sufficient binding ability may fail to be obtained in a case where the use amount of the block polymer is less than 0.1 parts by mass. Also the dispersion stability of the active material and so forth may be insufficient, and the uniformity of the mixture layer that is formed may worsen. In a case by contrast where the use amount of the block polymer used exceeds 20 parts by mass, coating properties onto a collector may worsen on account of the higher viscosity of the composition. As a result, the obtained mixture layer may exhibit inclusions and/or irregularities, which may adversely impact electrode characteristics.

If the amount of the block polymer is within the aforementioned range, a composition with excellent dispersion stability can be obtained, and it is also possible to obtain a mixture layer with extremely high adhesiveness to the collector, resulting in improved battery durability. Moreover, because the block polymer has sufficient ability to bind the active material even in a small quantity (such as 5 mass% or less), and because it has carboxy anions, it can yield an electrode with little interface resistance and excellent high-rate characteristics.

Of the active materials described above, lithium salts of transition metal oxides cab be used as positive electrode active materials, and for example *laminar rock* salt-type and spinel-type lithium-containing metal oxides may be used. Specific compounds that are *laminar rock* salt-type positive electrode active materials include lithium cobaltate, lithium nickelate, and NCM {$Li(Ni_x,Co_y,Mn_z)$, x + y + z = 1} and NCA {$Li(Ni_{1-a-b}Co_aAl_b)$} and the like, which are referred to as ternary materials. Examples of spinel-type positive electrode active materials include lithium manganate and the like. Apart from oxides, phosphate salts, silicate salts and sulfur and the like may also be used. Examples of phosphate salts include olivine-type lithium iron phosphate and the like. One of these may be used alone as a positive electrode active material, or two or more may be combined and used as a mixture or composite.

When a positive electrode active material containing a *laminar rock* salt-type lithium-containing metal oxide is dispersed in water, the dispersion exhibits alkalinity because the lithium ions on the surface of the active material are exchanged for hydrogen ions in the water. There is thus the risk of corrosion of aluminum foil (Al) or the like, which is a common positive electrode collector material. In such cases, it is desirable to neutralize the alkali component eluted from the active material by using an unneutralized or partially neutralized block polymer as the binder. The amount of the unneutralized or partially neutralized block polymer used is preferably such that the amount of unneutralized carboxyl groups in the block polymer is equal to or more than the amount of alkali eluted from the active material.

Because all the positive electrode active materials have low electrical conductivity, a conductive aid is normally added and used. Examples of conductive aids include carbon materials such as carbon black, carbon nanotubes, carbon fiber, graphite fine powder, and carbon fiber. Of these, carbon black, carbon nanotubes and carbon fiber are preferable to make it easier to obtain excellent conductivity. As the carbon black, ketjen *black and* acetylene black are preferable. One of these conductive aids may be used alone, or a combination of two or more may be used. The amount of the conductive aid used may be from 0.2 to 20 parts by mass or from 0.2 to 10 parts by mass relative to 100 parts by mass of the total amount of the active material for example from the standpoint of achieving both conductivity and energy density. An electrode active material that has been surface coated with a carbon material having conductivity may also be used.

Examples of negative electrode active materials include carbon materials, lithium metal, lithium alloys, metal oxides and the like, and one of these or a combination of two or more may be used. Of these, an active material formed of a carbon material such as natural graphite, artificial graphite, hard carbon, and soft carbon (hereunder referred to as a "carbon-based active material") is preferred, and hard carbon or a graphite such as natural graphite or artificial graphite is more preferred. In the case of graphite, spherical graphite is preferred from the standpoint of battery performance, and the particle size thereof is preferably in the range of from 1 to 20 microns for example, or from 5 to 15 microns for example. To increase the energy density, metals, metal oxides or the like capable of occluding lithium, such as silicon

and tin, may also be used as negative electrode active materials. Of these, silicon has a higher capacity than graphite, and an active material formed of a silicon material such as silicon, a silicon alloy or a silicon oxide such as silicon monoxide (SiO) (hereunder referred to as a "silicon-based active material") may be used. Although these silicon-based active materials have high capacities, however, the volume change accompanying charging and discharging is large. Accordingly, the block polymer is preferably used concomitantly with the above carbon-based active material. In that case, a large compounding amount of a silicon-based active material may cause an electrode material to collapse, and cycle characteristics (durability) may be significantly impaired. In a case where a silicon-based active material is utilized concomitantly, the use amount thereof is, from the above standpoint, for instance 60 mass% or lower, for instance 30 mass% or lower, relative to the carbon-based active material.

In the binder containing the block polymer, the polymer has a structural unit derived from an ethylenically unsaturated carboxylic acid monomer, such that the structural unit exhibits a high affinity towards the silicon-based active material, and thus the binder exhibits good binding ability. The binder of the present teaching exhibits as a result excellent binding ability even when a high-capacity type active material containing a silicon-based active material is used; this is deemed to be effective also in enhancing the durability of the obtained electrode.

Carbon-based active materials on their own have good electrical conductivity, and hence a conductive aid need not necessarily be added. In a case where a conductive aid is added for the purpose of for instance further lowering resistance, the use amount of the conductive aid is for instance 10 parts by mass or less, or for instance 5 parts by weight or less, relative to 100 parts by mass as the total amount of the active material.

In a case where the composition is in a slurry state, the use amount of the active material ranges for instance from 10 to 75 mass%, or for instance from 30 to 65 mass%, relative to the total amount of the composition. If the use amount of the active material is 10 mass% or higher, migration of the binder and so forth can be suppressed; such an amount is also advantageous in terms of the drying cost of the medium. If by contrast the use amount is 75 mass% or lower, the flowability and coating properties of the composition can be ensured, and a uniform mixture layer can be formed.

In a case where the composition is prepared in a wet powder state, the use amount of the active material ranges for instance from 60 to 97 mass%, and for instance from 70 to 90 mass%, relative to the total amount of the composition. The content of non-volatile components other than the active material, for instance the binder and the conductive aid, should be as small as possible from the viewpoint of energy density, but within ranges that allow ensuring the required binding ability and conductivity.

The composition uses water as a medium. A mixed solvent of water with a lower alcohol such as methanol or ethanol, a carbonate such as ethylene carbonate, a ketone such as acetone, or a water-soluble organic solvent such as tetrahydrofuran or N-methylpyrrolidone may also be used to adjust the consistency, drying properties and the like of the composition. The percentage of water in the mixed solvent is at least 50 mass% for example or at least 70 mass% for example.

In a case where the composition is brought to a coatable slurry state, the content of the medium including water, relative to the totality of the composition, can be set to range for instance from 25 to 90 mass%, and for instance from 35 to 70 mass%, from the viewpoint of coating properties of the slurry, the energy cost necessary for drying, and productivity. In a case where the composition is brought to a state of a wet powder that can be pressed, the content of the medium can be set to range for instance from 3 to 40 mass%, and for instance from 10 to 30 mass%, in terms of uniformity of the mixture layer after pressing.

The binder of the present teaching may consist only of the block polymer, but other binder components such as styrene/butadiene latex (SBR), acrylic latex and polyvinylidene fluoride latex may also be included. When another binder component is included, the amount used may be from 0.1 to 5 parts by mass or from 0.1 to 2 parts by mass, or from 0.1 to 1 parts by mass for example relative to 100 parts by mass of the active materials. If more than 5 parts by mass of the other binder component is used resistance may increase, resulting in inadequate high-rate characteristics. Of the above, styrene/butadiene latex is preferred for obtaining an excellent balance of binding ability and bending resistance.

This styrene-butadiene latex exists as an aqueous dispersion of a copolymer having a structural unit derived from an aromatic vinyl monomer such as styrene and a structural unit derived from an aliphatic conjugated diene monomer such as 1,3-butadiene. In addition to styrene, examples of the aromatic vinyl monomer include alpha-methylstyrene, vinyl toluene and divinyl benzene, and one or two or more of these may be used. Principally from the standpoint of binding ability, the structural unit derived from the aromatic vinyl monomer may constitute from 20 to 70 mass%, or for example from 30 to 50 mass% of the copolymer.

In addition to 1,3-butadiene, examples of the aliphatic conjugated diene monomer include 2-methyl-1,3-butadiene, 2,3-dimethyl-1,3-butadiene and 2-chloro-1,3-butadiene, and one or two or more of these may be used. Considering the binding ability of the binder and the flexibility of the resulting electrode, the structural unit derived from the aliphatic conjugated diene monomer may constitute from 30 to 60 mass% or for example from 40 to 60 mass% of the copolymer.

Besides the above monomers, a nitrile-containing monomer such as (meth)acrylonitrile, a carboxyl group-containing monomer such as (meth)acrylic acid, itaconic acid or maleic acid, or an ester group-containing monomer

such as methyl (meth)acrylate, may be used as a copolymerization monomer, in a styrene/butadiene latex, for the purpose of further enhancing performance for instance in terms of binding ability.

The structural unit derived from this other monomer may constitute from 0 to 30 mass% or for example from 0 to 20 mass% of the copolymer.

The composition contains the above active material, water and a binder, as essential constituent components, and is obtained by mixing the components by relying on known schemes. The method for mixing the above components is not particularly limited, and a known method can be resorted to; preferably, the method involves dry-blending powder components of for instance the active material, the conductive aid, and carboxyl group-containing polymer particles which are the binder, followed by mixing with a dispersion medium such as water, and by dispersion kneading of the whole. In a case where the electrode mixture layer composition is obtained in the form of a slurry, the composition is preferably finished as a slurry free of dispersion defects and aggregation. A known mixer such as a planetary mixer, a thin-film spinning mixer or a self-rotating mixer may be used as a mixing apparatus; a thin-film spin mixer is however preferred in terms of obtaining a good dispersion state quickly. When using a thin-film spin mixer, preferably pre-dispersion is carried out beforehand using a stirrer such as a Disper. The viscosity of the slurry may be set to range for instance from 100 to 10,000 mPa·s, and for instance from 1,000 to 5,000 mPa s, as B-viscosity, at 20 rpm.

When the composition is obtained as a wet powder, it is preferably kneaded with a Henschel mixer, blender, planetary mixer or twin-screw kneader or the like to obtain a uniform state without concentration irregularities.

## 3. Secondary Battery Electrode

The secondary battery electrode of the present teaching is provided with a mixture layer that is formed out of the composition, on the surface of a collector such as copper or aluminum. The mixture layer is formed by first coating the composition on the surface of the collector, and then drying to remove the water or other solvent. The method for coating the composition is not particularly limited, and a known method such as a doctor blade method, dip method, roll coating method, comma coating method, curtain coating method, gravure coating method or extrusion method may be adopted. Drying may also be accomplished by a known method such as hot air blowing, pressure reduction, (far) infrared irradiation, microwave irradiation or the like.

The mixture layer obtained after drying is normally subjected by pressing treatment with a metal press, roll press or the like. The active material and the binder are compacted together by pressing, which can improve the strength of the mixture layer and its adhesiveness with the collector. The thickness of the mixture layer may be adjusted by pressing to about 30% to 80% of the pre-pressed thickness, and the thickness of the mixture layer after pressing is normally about 4 to 200 microns.

## 4. Secondary Battery

A secondary battery can be prepared by providing a separator and an electrolyte solution with the secondary battery electrode of the teaching. The electrolyte solution may be in the form of a liquid or a gel.

The separator is disposed between the positive and negative electrodes of the battery, and serves to prevent short-circuits due to contact between the electrodes, hold the electrolyte solution and ensure ion conductivity. The separator is preferably an insulating finely porous film, having good ion permeability and mechanical strength. Specific materials that can be used include polyolefins such as polyethylene and polypropylene, and polytetrafluoroethylene and the like.

A commonly used known electrolyte solution may be used according to the type of active material. In the case of a lithium-ion secondary battery, specific examples of solvents include cyclic carbonates with high dielectric constants and high electrolyte dissolution ability, such as propylene carbonate and ethylene carbonate, and low-viscosity linear carbonates such as ethyl methyl carbonate, dimethyl carbonate and diethyl carbonate, and these may be used alone or as mixed solvents. The electrolyte solution is used as a solution of a lithium salt such as $LiPF_6$, $LiSbF_6$, $LiBF_4$, $LiClO_4$ or $LiAlO_4$ dissolved in these solvents. In the case of a nickel-hydrogen secondary battery, a potassium hydroxide aqueous solution may be used as the electrolyte solution. To obtain secondary battery, a positive electrode plate and negative electrode plate are separated by separators, made into a wound or laminated structure, and enclosed in a case or the like.

As explained above, the secondary battery electrode mixture layer composition (electrode slurry) containing the secondary battery electrode binder disclosed in the present specification exhibits low slurry viscosity, excellent binding ability to an electrode material in an electrode mixture layer, and excellent adhesiveness to a collector. Consequently, a secondary battery equipped with an electrode obtained using this binder is expected to provide good integrity and good durability (cycle characteristics) even after repeated charge and discharge, making it suitable as a secondary battery for automotive use.

[Examples]

The present teaching is explained in detail below based on examples, but the present teaching is not limited by these examples. Unless otherwise specified, "parts" and "%" indicate mass parts and mass% values.

<Molecular Weight Measurement>

A respective aqueous solution (0.01 g of polymer solids) containing the polymer obtained in each production example and each comparative production example is collected and is diluted with 2 g of methanol, and thereafter has added thereto trimethylsilyldiazomethane (by Tokyo Chemical Industry Co., Ltd., 10% hexane solution) until the polymer solution turns yellow, to yield a methyl esterification product (methyl esterification rate: 100%) of carboxyl groups. The above methyl esterification product is subjected to a gel permeation chromatography (GPC) measurement under the conditions below, and the number-average molecular weight (Mn) and weight-average molecular weight (Mw) on a polystyrene basis are worked out. The molecular weight distribution (Mw/Mn) is calculated from the obtained values.

(GPC Measurement Conditions)

Column: four Tosoh TSKgel SuperMultipore HZ-M columns
Solvent: tetrahydrofuran
Temperature: 40°C
Detector: RI
Flow rate: 600 μL/min

<Measurement of a Monomer Reaction Rate>

Firstly, part of the solution prior to start of polymerization and part of the polymerization solution at a predetermined time are sampled and dissolved in methanol, to prepare respective 2 wt% solutions, after which 0.02 g of dimethyl sulfoxide as an internal standard are added, to yield a measurement sample.

The measurement samples are then subjected to a gas chromatography (GC) measurement; a monomer concentration X in the solution prior to the start of polymerization and a monomer concentration Y in the polymerization solution at a predetermined time are obtained, and a monomer reaction rate is worked out in accordance with the expression below.

$$\text{Monomer reaction rate (\%)} = (X-Y)/X \times 100$$

(GC Measurement Conditions)

Apparatus: 7820A by Agilent Technologies Inc.
Column: CP-Sil 5CB (dimethylpolysiloxane) by GL Sciences Inc.
Column length 30 m, column diameter 0.32 mm, df=0.3 μm
Carrier gas: He
Gas flow rate: 1.5 mL/min
Split ratio: 40:1
Injection volume: 1.0 μL
Inlet temperature: 230°C
Detector: FID
Detector temperature: 250°C
$H_2$ flow rate: 40 mL/min
Air flow rate: 450 mL/min
$N_2$ flow: 25 mL/min
Temperature rising conditions: 50°C (5 min) → 10°C/min → 230°C (5 min)

<Glass Transition Temperature (Tg)>

The glass transition temperature (Tg) of each polymer block in each obtained block polymer is determined on the basis of an intersection of an inflection-point tangent and a base line of a heat flux curve obtained by analysis of the respective block polymer using a differential scanning calorimeter (DSC). To obtain the heat flux curve, about 10 mg of a respective sample are cooled to -50°C, are held for 5 minutes, and are then heated up to 300°C at a rate of 10°C/min, with subsequent cooling down to -50°C, and holding for 5 minutes, followed by warming up to 350°C at 10°C/min.

Measuring instrument: DSC6220 by SII NanoTechnology Inc.
Measurement atmosphere: nitrogen atmosphere

<Composition Ratio of the Block Polymer>

The composition ratio (mass ratio) of the obtained block polymer is identified and calculated on the basis of $^1$H-NMR measurement.

<Method for Measuring Solids Concentration>

About 0.5 g of each sample is collected in a respective weighing bottle whose mass has been measured beforehand [mass of weighing bottle = B (g)], and the whole is accurately weighed together with the weighing bottle [$W_0$ (g)], after which each sample is accommodated, together with the bottle, in a windless dryer and is dried for 45 minutes at 155°C; the weight at that point in time is measured together with the weighing bottle [$W_1$ (g)], and the solids concentration is worked out in accordance with the expression below.

$$\text{Solids concentration (mass\%)} = (W_1 - B)/(W_0 - B) \times 100$$

<<Production of a Polymer>>

(Production Example 1: Production of Polymer A)

Into a 2 L flask equipped with a stirrer and a thermometer there are inputted 2-{[(2-carboxyethyl)sulfanylthiocarbonyl]sulfanyl}propanoic acid (hereafter also referred to as "CBSTSP") (0.28 parts), 4,4'-azobis(4-cyanovaleric acid) (hereafter also referred to as "ACVA") (0.014 parts), acrylic acid (hereafter also referred to as "AA") (33.4 parts) and ion-exchanged water (134.6 parts), the whole is thoroughly degassed by nitrogen bubbling, and polymerization is initiated in a thermostatic bath at 70°C. After 4 hours, the reaction is stopped through cooling down to room temperature. The reaction rate of AA at this point in time is 95%. Molecular weights are Mn 32,000, Mw 36,200, and Mw/Mn 1.13.

Then 2-methoxyethyl acrylate (hereafter also referred to as "MEA") (78.9 parts), ACVA (0.014 parts) and ion-exchanged water (315.5 parts) are added to the above polymerization solution, the whole is thoroughly degassed by nitrogen bubbling, and polymerization is initiated in a thermostatic bath at 70°C. After 3 hours, the reaction is stopped through cooling down to room temperature. At this point in time, the MEA reaction rate is 92%, the polymer block (B) contains a structural unit derived from unreacted AA at the time of the production of the polymer block (A), and the content of AA is 2 mass%. The molecular weights are Mn 104,000, Mw 138,000, and Mw/Mn 1.33.

Next, ion-exchanged water (187.5 parts) is added, and thereafter neutralization is performed through addition of an aqueous solution resulting from dissolving lithium hydroxide monohydrate (hereafter also referred to as "$LiOH \cdot H_2O$") (17.5 parts) in ion-exchanged water (232.4 parts), with stirring for 1 hour at 25°C, to thereby obtain an aqueous solution containing Polymer A (Li salt, degree of neutralization 98 mol%).

(Production Examples 2 to 5 and Comparative Production Examples 1 and 2: Production of Polymer B to Polymer E, Polymer O and Polymer P)

The same operation as in Production example 1 are performed, but herein the types and amounts of starting materials inputted into a flask are modified as given in Tables 1A and 1B, and reaction time is adjusted as appropriate, to obtain aqueous solutions respectively containing Polymer B to Polymer E, Polymer O and Polymer P. A second polymerization step is not performed in the production of polymer Q in Comparative production example 1.

(Production Example 6: Production of Polymer F)

Into a 2 L flask equipped with a stirrer and a thermometer there are inputted CBSTSP (0.28 parts), ACVA (0.014 parts), AA (33.5 parts) and ion-exchanged water (135.0 parts), the whole is thoroughly degassed by nitrogen bubbling, and polymerization is initiated in a thermostatic bath at 70°C. After 4 hours, the reaction is stopped through cooling down to room temperature. The reaction rate of AA at this point is 94%. Molecular weights are Mn 31,800, Mw 36,100 and Mw/Mn 1.14.

Then MEA (67.6 parts), ACVA (0.014 parts) and ion-exchanged water (314.8 parts) are added to the above polymerization solution, the whole is thoroughly degassed by nitrogen bubbling, and polymerization is initiated in a thermostatic bath at 70°C. After 1 hour, the reaction is stopped through cooling down to room temperature. Herein the MEA reaction rate is 97%, the polymer block (B) contains a structural unit derived from AA that had not reacted at the time of the production of the polymer block (A), and the content of AA is 3 mass%. Molecular weights are Mn 96,800, Mw 118,000 and Mw/Mn 1.22.

Next, phenoxyethyl acrylate (Viscoat # 192 by Osaka Organic Chemical Industry Co., Ltd., hereafter also referred to as "PEA") (11.1 parts) are added to the above polymerization solution, the whole is thoroughly degassed by nitrogen bubbling, and polymerization is initiated in a thermostatic bath at 70°C. After 2 hours, the reaction is stopped through cooling down to room temperature. The reaction rate of PEA at this point in time is 98%, and molecular weights are Mn 108,000, Mw 168,000 and Mw/Mn 1.56.

Next, ion-exchanged water (187.4 parts) is added, and thereafter neutralization is performed through addition of an aqueous solution resulting from dissolving $LiOH \cdot H_2O$ (17.5 parts) in ion-exchanged water (232.7 parts), with stirring for 1 hour at 25°C, to thereby obtain an aqueous solution containing Polymer F (Li salt, degree of neutralization 98 mol%).

(Production Examples 7 to 16: Production of Polymer G to Polymer P)

The same operation as in Production example 6 is performed but herein the types and amounts of the starting materials inputted into the flask are modified as given in Tables 1A and 1B and Tables 2A to 2C, and reaction time is adjusted as appropriate, to obtain aqueous solutions respectively containing Polymer G to Polymer P.

(Comparative Production Example 3: Production of Polymer S)

Into a 1 L flask equipped with a stirrer and a thermometer there are inputted 0.23 parts of CBSTSP, 0.022 parts of 2,2'-azobis(2,4-dimethylvaleronitrile) (product name "V-65", by Fujifilm Wako Pure Chemical Industries, Ltd.), 100 parts of MEA, and 66.8 parts of acetonitrile, the whole is thoroughly degassed by nitrogen bubbling, and polymerization is initiated in a thermostatic bath at 60°C. After 2 hours, the reaction is stopped through cooling down to room temperature. The above polymerization solution is purified by reprecipitation from methanol/water =90/10 (vol%), and is vacuum dried to yield a first polymer of Polymer P. The reaction rate of MEA based on a gas chromatography measurement is 90%. Molecular weights by GPC measurement (polystyrene-basis) are Mn 99000, Mw 133700 and Mw/Mn 1.35.

Into a 2 L flask equipped with a stirrer and a thermometer there are next inputted 567 parts of acetonitrile, 2.20 parts of ion-exchanged water, 98 parts of AA, 0.90 parts of tritrimethylolpropane diallyl ether (product name "Neoallyl T-20", by Osaka Soda Co., Ltd.), 2.0 parts of a resin fraction in the form of the obtained first polymer of Polymer P, and triethylamine equivalent to 1.0 mol% of AA above. The interior of the reactor is thoroughly purged with nitrogen, and thereafter the reactor is heated to an internal temperature of 55°C. Once the internal temperature is confirmed to have stabilized at 55°C, 0.040 parts of V-65 are added as a polymerization initiator; this is taken as a polymerization initiation point, given that white turbidity is observed in the reaction solution. The monomer concentration is calculated to be 15.0%. The polymerization reaction is continued while the internal temperature is kept at 55°C, through adjustment of an external temperature (water bath temperature), and then the internal temperature is raised to 65°C once 6 hours have elapsed from the polymerization initiation point. The internal temperature is kept at 65°C, and once 12 hours have elapsed since the polymerization initiation point, cooling of the reaction solution is initiated; then 52.4 parts of a $LiOH \cdot H_2O$ powder are added after the internal temperature has dropped down to 25°C. After the above addition, stirring is continued for 12 hours at room temperature, to yield a slurry-like polymerization reaction solution in which particles of Block polymer S (Li salt, degree of neutralization 90 mol%) are dispersed in a medium.

The reaction rate of AA after 12 hours have elapsed since the polymerization initiation point is 97%. The obtained polymerization reaction solution is centrifuged to cause polymer particles to precipitate, and thereafter a supernatant is removed. Thereafter, the precipitate is redispersed in acetonitrile of weight identical to that of the polymerization reaction solution, and thereafter a washing operation of precipitating the polymer particles by centrifugation and removing the supernatant is repeated twice. The precipitate is collected and dried at 80°C for 3 hours under reduced pressure, to remove a volatile fraction, and thereby yield a powder of Block polymer S. Block polymer S is hygroscopic, and hence is stored sealed in a container having water vapor barrier properties.

Among the polymers, Polymer A to Polymer E, Polymer R and Polymer S are block polymers made up of AB di-block bodies, Polymer F to Polymer P are block polymers made up of ABC tri-block bodies, and Polymer Q is a non-block polymer.

Tables 1A and 1B and Tables 2A to 2C set out for instance preparation starting materials and physical properties values of the obtained Polymer A through Polymer S.

[Table 1A]

| Production example No. | | | | | Production example 1 | Production example 2 | Production example 3 | Production example 4 | Production example 5 |
|---|---|---|---|---|---|---|---|---|---|
| Polymer No. | | | | | Polymer A | Polymer B | Polymer C | Polymer D | Polymer E |
| First polymerization step: Polymer block (A) | Preparation amount (g) | Monomer | AA | Water solubility: miscible | 33.4 | 23.5 | 33.4 | 33.4 | 73.1 |
| | | Control agent | CBSTSP | | 0.28 | 0.30 | 0.28 | 0.28 | 0.23 |
| | | Initiator | ACVA | | 0.014 | 0.010 | 0.014 | 0.014 | 0.031 |
| | | Solvent | Ion-exchanged water | | 134.6 | 95.2 | 134.6 | 134.6 | 293.5 |
| | Reaction rate of monomer (%) | | AA | | 95 | 96 | 81 | 65 | 91 |
| | Polymer block (A) | | AA content (mass%) | | 100 | 100 | 100 | 100 | 100 |
| | | | Glass transition temperature (°C)* Value based on structural unit including lithium salt of AA | | 310 | 309 | 305 | 302 | 308 |
| | | | Molecular weight | Mn | 32,000 | 19,800 | 24,600 | 20,000 | 79,200 |
| | | | | Mw | 36,200 | 22,000 | 27,600 | 22,300 | 92,700 |
| | | | | Mw/Mn | 1.13 | 1.11 | 1.12 | 1.12 | 1.17 |

(continued)

| Production example No. | | | | | Production example 1 | Production example 2 | Production example 3 | Production example 4 | Production example 5 |
|---|---|---|---|---|---|---|---|---|---|
| Polymer No. | | | | | Polymer A | Polymer B | Polymer C | Polymer D | Polymer E |
| Second polymerization step: Polymer block (B) | Preparation amount (g) | Monomer | MEA Water solubility: 11.6[g/100g of water] | | 78.9 | 93.9 | 78.9 | 78.9 | 18.3 |
| | | Initiator | ACVA | | 0.014 | 0.017 | 0.014 | 0.014 | |
| | | Solvent | Ion-exchanged water | | 315.5 | 375.5 | 315.5 | 315.5 | 73.2 |
| | Reaction rate of monomer (%) | | MEA | | 92 | 92 | 76 | 75 | 98 |
| | Polymer block (B) | | AA content (mass%) | | 2 | 1 | 10 | 17 | 27 |
| | | | Content of MEA (mass%) | | 98 | 99 | 90 | 83 | 73 |
| | | | Glass transition temperature (°C) | | -36 | -38 | -32 | -26 | -37 |
| | Diblock polymer | | Molecular weight | Mn | 104,000 | 103,000 | 103,000 | 113,000 | 99,900 |
| | | | | Mw | 138,000 | 134,000 | 138,000 | 143,000 | 128,000 |
| | | | | Mw/Mn | 1.33 | 1.30 | 1.34 | 1.27 | 1.28 |
| Third polymerization step: Polymer block (C) | Preparation amount (g) | Monomer | PEA | Water solubility: 0.38[g/100g of water] | - | - | - | - | - |
| | Reaction rate of monomer (%) | | PEA | | - | - | - | - | - |
| | Polymer block (C) | | Content of MEA (mass%) | | - | - | - | - | - |
| | | | Content of PEA (mass%) | | - | - | - | - | - |
| | | | Glass transition temperature (°C) | | - | - | - | - | - |
| | Triblock polymer | | Molecular weight | Mn | - | - | - | - | - |
| | | | | Mw | - | - | - | - | - |
| | | | | Mw/Mn | - | - | - | - | - |

(continued)

| Production example No. | | | | Production example 1 | Production example 2 | Production example 3 | Production example 4 | Production example 5 |
|---|---|---|---|---|---|---|---|---|
| Polymer No. | | | | Polymer A | Polymer B | Polymer C | Polymer D | Polymer E |
| Dilution step | Preparation amount (g) | Solvent | Ion-exchanged water | 188 | 196 | 188 | 188 | 153 |
| Neutralization step | Preparation amount (g) | Neutralizing agent | $LiOHH_2O$ | 17.5 | 12.3 | 17.5 | 17.5 | 38.3 |
| | | Solvent | Ion-exchanged water | 232 | 203 | 232 | 232 | 350 |
| Block polymer | Composition ratio (mass%) | | Polymer block (A) | 30 | 21 | 31 | 27 | 79 |
| | | | Polymer block (B) | 70 | 79 | 69 | 73 | 21 |
| | | | Polymer block (C) | - | - | - | - | - |
| | Degree of neutralization of ethylenically unsaturated carboxylic acid monomer (mol%) | | | 98 | 98 | 98 | 98 | 98 |
| | Aqueous solution containing the polymer | | Solids concentration (mass%) | 11.03 | 11.08 | 10.66 | 10.21 | 10.89 |

[Table 1B]

| Production example No. | | | | | Production example 6 | Production example 7 | Production example 8 | Production example 9 | Production example 10 |
|---|---|---|---|---|---|---|---|---|---|
| Polymer No. | | | | | Polymer F | Polymer G | Polymer H | Polymer I | Polymer J |
| First polymerization step: Polymer block (A) | Preparation amount (g) | Monomer | AA | Water solubility: miscible | 33.5 | 33.7 | 33.6 | 33.6 | 33.6 |
| | | Control agent | CBSTSP | | 0.28 | 0.14 | 0.14 | 0.14 | 0.14 |
| | | Initiator | ACVA | | 0.014 | 0.014 | 0.014 | 0.014 | 0.014 |
| | | Solvent | Ion-exchanged water | | 135.0 | 135.4 | 135.2 | 135.2 | 135.2 |
| | Reaction rate of monomer (%) | | AA | | 94 | 88 | 92 | 88 | 91 |
| | Polymer block (A) | | AA content (mass%) | | 100 | 100 | 100 | 100 | 100 |
| | | | Glass transition temperature (° C)* Value based on structural unit including lithium salt of AA | | 315 | 313 | 311 | 307 | 306 |
| | | | Molecular weight | Mn | 31,800 | 62,800 | 64,500 | 63,000 | 64,200 |
| | | | | Mw | 36,100 | 74,300 | 77,000 | 73,900 | 74,100 |
| | | | | Mw/Mn | 1.14 | 1.18 | 1.19 | 1.17 | 1.15 |
| Second polymerization step: Polymer block (B) | Preparation amount (g) | Monomer | MEA Water solubility: 11.6[g/100g of water] | | 67.6 | 67.3 | 56.1 | 44.9 | 73.0 |
| | | Initiator | ACVA | | 0.014 | 0.014 | 0.014 | 0.014 | 0.014 |
| | | Solvent | Ion-exchanged water | | 314.8 | 313.9 | 314.3 | 314.2 | 314.3 |
| | Reaction rate of monomer (%) | | MEA | | 97 | 92 | 92 | 92 | 97 |
| | Polymer block (B) | | AA content (mass%) | | 3 | 6 | 5 | 9 | 4 |
| | | | Content of MEA (mass%) | | 97 | 94 | 95 | 91 | 96 |
| | | | Glass transition temperature (° C) | | -36 | -35 | -38 | -39 | -33 |
| | Diblock polymer | | Molecular weight | Mn | 96,800 | 178,000 | 158,000 | 138,000 | 187,000 |
| | | | | Mw | 118,000 | 265,000 | 219,000 | 178,000 | 280,000 |
| | | | | Mw/Mn | 1.22 | 1.49 | 1.39 | 1.29 | 1.50 |

(continued)

| Production example No. | | | | | Production example 6 | Production example 7 | Production example 8 | Production example 9 | Production example 10 |
|---|---|---|---|---|---|---|---|---|---|
| Polymer No. | | | | | Polymer F | Polymer G | Polymer H | Polymer I | Polymer J |
| Third polymerization step: Polymer block (C) | Preparation amount (g) | Monomer | PEA | Water solubility: 0.38[g/100g of water] | 11.1 | 11.2 | 22.5 | 33.6 | 5.6 |
| | Reaction rate of monomer (%) | | PEA | | 98 | 98 | 98 | 98 | 99 |
| | Polymer block (C) | | Content of MEA (mass%) | | 16 | 33 | 17 | 10 | 28 |
| | | | Content of PEA (mass%) | | 84 | 67 | 83 | 90 | 72 |
| | | | Glass transition temperature (° C) | | 0 | 1 | 3 | 5 | 0 |
| | Triblock polymer | | Molecular weight | Mn | 108,000 | 198,000 | 189,000 | 193,000 | 197,000 |
| | | | | Mw | 168,000 | 325,000 | 331,000 | 362,000 | 329,000 |
| | | | | Mw/Mn | 1.56 | 1.64 | 1.75 | 1.88 | 1.67 |
| Dilution step | Preparation amount (g) | Solvent | Ion-exchanged water | | 187 | 187 | 187 | 187 | 187 |
| Neutralization step | Preparation amount (g) | Neutralizing agent | $LiOH \cdot H_2O$ | | 17.5 | 17.7 | 17.6 | 17.6 | 17.6 |
| | | Solvent | Ion-exchanged water | | 233 | 233 | 233 | 233 | 233 |
| Block polymer | Composition ratio (mass%) | | Polymer block (A) | | 29 | 29 | 28 | 27 | 29 |
| | | | Polymer block (B) | | 61 | 60 | 50 | 41 | 66 |
| | | | Polymer block (C) | | 10 | 11 | 22 | 32 | 5 |
| | Degree of neutralization of ethylenically unsaturated carboxylic acid monomer (mol%) | | | | 98 | 98 | 98 | 98 | 98 |
| | Aqueous solution containing the polymer | | Solids concentration (mass%) | | 11.35 | 11.25 | 11.05 | 12.03 | 10.99 |

[Table 2A]

| Production example No · | | | | | Production example 11 | Production example 12 | Production example 13 |
|---|---|---|---|---|---|---|---|
| Polymer No. | | | | | Polymer K | Polymer L | Polymer M |
| First polymerization step: Polymer block (A) | Preparation amount (g) | Monomer | AA | Water solubility: miscible | 23.5 | 42.9 | 23.5 |
| | | | ACMO | Water solubility: miscible | - | - | - |
| | | | MEA | Water solubility: 11.6 (g/100g of water) | - | - | - |
| | | Control agent | CBSTSP | | 0.15 | 0.14 | 0.15 |
| | | Initiator | ACVA | | 0.010 | 0.015 | 0.010 |
| | | Solvent | Ion-exchanged water | | 94.6 | 172.3 | 94.7 |
| | Reaction rate of monomer (%) | | AA | | 93 | 85 | 92 |
| | | | ACMO | | | | |
| | | | MEA | | | | |
| | Polymer block (A) | | Content of AA (mass%) | | 100 | 100 | 100 |
| | | | Content of ACMO (mass%) | | - | - | - |
| | | | Content of MEA (mass%) | | - | - | - |
| | | | Glass transition temperature (° C) * Value based on structural unit including lithium salt of AA | | 310 | 314 | 312 |
| | | | Molecular weight | Mn | 41,600 | 79,800 | 40,900 |
| | | | | Mw | 47,000 | 99,900 | 47,800 |
| | | | | Mw/Mn | 1.13 | 1.25 | 1.17 |

(continued)

| Production example No · | | | | | Production example 11 | Production example 12 | Production example 13 |
|---|---|---|---|---|---|---|---|
| Polymer No. | | | | | Polymer K | Polymer L | Polymer M |
| Second polymerization step: Polymer block (B) | Preparation amount (g) | Monomer | MEA | Water solubility: 11.6 (g/100g of water) | 88.1 | 59.0 | |
| | | | MA | Water solubility: 6 (g/100g of water) | - | - | 88.1 |
| | | | EA | Water solubility: 1.5 (g/100g of water) | - | - | - |
| | | | ACMO | Water solubility: miscible | - | - | - |
| | | Initiator | ACVA | | 0.019 | 0.008 | 0.019 |
| | | Solvent | Ion-exchanged water | | 376.1 | 257.7 | 376.1 |
| | Reaction rate of monomer (%) | | MEA | | 96 | 96 | - |
| | | | MA | | - | - | 96 |
| | | | EA | | - | - | - |
| | | | ACMO | | - | - | - |
| | Polymer block (B) | | Content of AA (mass%) | | 2 | 10 | 2 |
| | | | Content of MEA (mass%) | | 98 | 90 | - |
| | | | Content of MA (mass%) | | - | - | 98 |
| | | | Content of EA (mass%) | | - | - | - |
| | | | Content of ACMO (mass%) | | - | - | - |
| | | | Glass transition temperature (° C) | | -34 | -33 | 8 |
| | Diblock polymer | | Molecular weight | Mn | 191,000 | 185,000 | 188,000 |
| | | | | Mw | 312,000 | 289,000 | 235,000 |
| | | | | Mw/Mn | 1.63 | 1.56 | 1.25 |

(continued)

| Production example No · | | | | | Production example 11 | Production example 12 | Production example 13 |
|---|---|---|---|---|---|---|---|
| Polymer No. | | | | | Polymer K | Polymer L | Polymer M |
| Third polymerization step: Polymer block (C) | Preparation amount (g) | Monomer | PEA | Water solubility: 0.38 (g/100g of water) | 12.3 | 5.4 | 5.9 |
| | Reaction rate of monomer (%) | | PEA | | 98 | 99 | 99 |
| | Polymer block (C) | | Content of MEA (mass%) | | 23 | 31 | - |
| | | | Content of MA (mass%) | | - | - | 38 |
| | | | Content of EA (mass%) | | - | - | - |
| | | | Content of ACMO (mass%) | | - | - | - |
| | | | Content of PEA (mass%) | | 77 | 69 | 62 |
| | | | Glass transition temperature (° C) | | 3 | 1 | 1 |
| | Triblock polymer | | Molecular weight | Mn | 189,000 | 191,000 | 199,000 |
| | | | | Mw | 333,000 | 326,000 | 283,000 |
| | | | | Mw/Mn | 1.76 | 1.71 | 1.42 |
| Dilution step | Preparation amount (g) | Solvent | Ion-exchanged water | | 196 | 179 | 196 |
| Neutralization step | Preparation amount (g) | Neutralizing agent | $LiOH \cdot H_2O$ | | 12.3 | 22.5 | 12.3 |
| | | Solvent | Ion-exchanged water | | 203 | 261 | 203 |
| Block polymer | Composition ratio (mass%) | | Polymer block (A) | | 18 | 38 | 18 |
| | | | Polymer block (B) | | 71 | 56 | 73 |
| | | | Polymer block (C) | | 10 | 6 | 9 |
| | Degree of neutralization of ethylenically unsaturated carboxylic acid monomer (mol%) | | | | 98 | 98 | 98 |
| | Aqueous solution containing the polymer | | Solids concentration (mass%) | | 10.88 | 10.78 | 11.65 |

[Table 2B]

| Production example No · | | | | | Production example 14 | Production example 15 | Production example 16 |
|---|---|---|---|---|---|---|---|
| Polymer No. | | | | | Polymer N | Polymer O | Polymer P |
| First polymerization step: Polymer block (A) | Preparation amount (g) | Monomer | AA | Water solubility: miscible | 23.5 | 18.1 | 33.6 |
| | | | ACMO | Water solubility: miscible | - | 18.1 | - |
| | | | MEA | Water solubility: 11.6 (g/100g of water) | - | - | - |
| | | Control agent | CBSTSP | | 0.15 | 0.30 | 0.28 |
| | | Initiator | ACVA | | 0.010 | 0.015 | 0.014 |
| | | Solvent | Ion-exchanged water | | 94.7 | 145.7 | 135.5 |
| | Reaction rate of monomer (%) | | AA | | 92 | 95 | 91 |
| | | | ACMO | | - | 95 | - |
| | | | MEA | | - | - | - |
| | Polymer block (A) | | Content of AA (mass%) | | 100 | 50 | 100 |
| | | | Content of ACMO (mass%) | | - | 50 | - |
| | | | Content of MEA (mass%) | | - | - | - |
| | | | Glass transition temperature (° C) * Value based on structural unit including lithium salt of AA | | 310 | 223 | 314 |
| | | | Molecular weight | Mn | 41,400 | 29,500 | 30,100 |
| | | | | Mw | 49,400 | 34,100 | 35,200 |
| | | | | Mw/Mn | 1.19 | 1.16 | 1.17 |

(continued)

| Production example No · | | | | | Production example 14 | Production example 15 | Production example 16 |
|---|---|---|---|---|---|---|---|
| Polymer No. | | | | | Polymer N | Polymer O | Polymer P |
| Second polymerization step: Polymer block (B) | Preparation amount (g) | Monomer | MEA | Water solubility: 11.6 (g/100g of water) | - | 72.3 | 33.6 |
| | | | MA | Water solubility: 6 (g/100g of water) | - | - | - |
| | | | EA | Water solubility: 1.5 (g/100g of water) | 88.1 | - | - |
| | | | ACMO | Water solubility: miscible | - | - | 33.6 |
| | | Initiator | ACVA | | 0.019 | 0.015 | 0.014 |
| | | Solvent | Ion-exchanged water | | 376.1 | 336.5 | 314.1 |
| | Reaction rate of monomer (%) | | MEA | | - | 98 | 96 |
| | | | MA | | - | - | - |
| | | | EA | | 97 | - | - |
| | | | ACMO | | - | - | 96 |
| | Polymer block (B) | | Content of AA (mass%) | | 2 | 2 | 4 |
| | | | Content of MEA (mass%) | | - | 98 | 48 |
| | | | Content of MA (mass%) | | - | - | - |
| | | | Content of EA (mass%) | | 98 | - | - |
| | | | Content of ACMO (mass%) | | - | - | 48 |
| | | | Glass transition temperature (° C) | | -7 | -36 | 15 |
| | Diblock polymer | | Molecular weight | Mn | 190,000 | 89,800 | 92,100 |
| | | | | Mw | 244,000 | 116,000 | 131,000 |
| | | | | Mw/Mn | 1.28 | 1.29 | 1.42 |

(continued)

| Production example No · | | | | | Production example 14 | Production example 15 | Production example 16 |
|---|---|---|---|---|---|---|---|
| Polymer No. | | | | | Polymer N | Polymer O | Polymer P |
| Third polymerization step: Polymer block (C) | Preparation amount (g) | Monomer | PEA | Water solubility: 0.38 (g/100g of water) | 5.9 | 11.8 | 11.2 |
| | Reaction rate of monomer (%) | | PEA | | 98 | 99 | 99 |
| | Polymer block (C) | | Content of MEA (mass%) | | - | 11 | 10 |
| | | | Content of MA (mass%) | | - | - | - |
| | | | Content of EA (mass%) | | 31 | - | - |
| | | | Content of ACMO (mass%) | | - | - | 10 |
| | | | Content of PEA (mass%) | | 69 | 89 | 80 |
| | | | Glass transition temperature (° C) | | 0 | 2 | 1 |
| | Triblock polymer | | Molecular weight | Mn | 193,000 | 96,700 | 103,000 |
| | | | | Mw | 294,000 | 153,000 | 179,000 |
| | | | | Mw/Mn | 1.52 | 1.58 | 1.74 |
| Dilution step | Preparation amount (g) | Solvent | Ion-exchanged water | | 196 | 201 | 187 |
| Neutralization step | Preparation amount (g) | Neutralizing agent | $LiOH{\cdot}H_2O$ | | 12.3 | 9.5 | 17.6 |
| | | Solvent | Ion-exchanged water | | 203 | 187 | 233 |
| Block polymer | Composition ratio (mass%) | | Polymer block (A) | | 21 | 32 | 27 |
| | | | Polymer block (B) | | 73 | 59 | 61 |
| | | | Polymer block (C) | | 6 | 9 | 12 |
| | Degree of neutralization of ethylenically unsaturated carboxylic acid monomer (mol%) | | | | 98 | 98 | 98 |
| | Aqueous solution containing the polymer | | Solids concentration (mass%) | | 11.8 | 10.78 | 11.05 |

[Table 2C]

| Comparative production example No. | | | | | Comparative production example 1 | Comparative production example 2 | Comparative production example 3 |
|---|---|---|---|---|---|---|---|
| Polymer No. | | | | | Polymer Q | Polymer R | Polymer S |
| First polymerization step: Polymer block (A) | Preparation amount (g) | Monomer | AA | Water solubility: miscible | 23.5 | 84.0 | Described in the specification |
| | | | ACMO | Water solubility: miscible | - | - | |
| | | | MEA | Water solubility: 11.6 (g/100g of water) | 93.8 | - | |
| | | Control agent | CBSTSP | | 0.30 | 0.218 | |
| | | Initiator | ACVA | | 0.066 | 0.035 | |
| | | Solvent | Ion-exchanged water | | 470.8 | 336.9 | |
| | Reaction rate of monomer (%) | | AA | | 98 | 98 | |
| | | | ACMO | | - | - | |
| | | | MEA | | 93 | - | |
| | Polymer block (A) | | Content of AA (mass%) | | 21 | 100 | |
| | | | Content of ACMO (mass%) | | - | - | |
| | | | Content of MEA (mass%) | | 79 | - | |
| | | | Glass transition temperature (° C) * Value based on structural unit including lithium salt of AA | | 10 | 312 | |
| | | | Molecular weight | Mn | 96,800 | 99,100 | |
| | | | | Mw | 135,000 | 126,000 | |
| | | | | Mw/Mn | 1.39 | 1.27 | |

(continued)

| Comparative production example No. | | | | | Comparative production example 1 | Comparative production example 2 | Comparative production example 3 |
|---|---|---|---|---|---|---|---|
| Polymer No. | | | | | Polymer Q | Polymer R | Polymer S |
| Second polymerization step: Polymer block (B) | Preparation amount (g) | Monomer | MEA | Water solubility: 11.6 (g/100g of water) | - | 1.8 | Described in the specification |
| | | | MA | Water solubility: 6 (g/100g of water) | - | - | |
| | | | EA | Water solubility: 1.5 (g/100g of water) | - | - | |
| | | | ACMO | Water solubility: miscible | - | - | |
| | | Initiator | ACVA | | - | - | |
| | | Solvent | Ion-exchanged water | | - | 7.1 | |
| | Reaction rate of monomer (%) | | MEA | | - | 99 | |
| | | | MA | | - | - | |
| | | | EA | | - | - | |
| | | | ACMO | | - | - | |
| | Polymer block (B) | | Content of AA (mass%) | | - | 49 | |
| | | | Content of MEA (mass%) | | - | 51 | |
| | | | Content of MA (mass%) | | - | - | |
| | | | Content of EA (mass%) | | - | - | |
| | | | Content of ACMO (mass%) | | - | - | |
| | | | Glass transition temperature (° C) | | - | -35 | |
| | Diblock polymer | | Molecular weight | Mn | - | 102,000 | |
| | | | | Mw | - | 131,000 | |
| | | | | Mw/Mn | - | 1.28 | |

(continued)

| Comparative production example No. | | | | | Comparative production example 1 | Comparativ e production example 2 | Comparative production example 3 |
|---|---|---|---|---|---|---|---|
| Polymer No. | | | | | Polymer Q | Polymer R | Polymer S |
| Third polymerization step: Polymer block (C) | Preparation amount (g) | Monomer | PEA | Water solubility: 0.38 (g/100g of water) | - | - | Described in the specification |
| | Reaction rate of monomer (%) | | PEA | | - | - | |
| | Polymer block (C) | | Content of MEA (mass%) | | - | - | |
| | | | Content of MA (mass%) | | - | - | |
| | | | Content of EA (mass%) | | - | - | |
| | | | Content of ACMO (mass%) | | - | - | |
| | | | Content of PEA (mass%) | | - | - | |
| | | | Glass transition temperature (° C) | | - | - | |
| | Triblock polymer | | Molecular weight | Mn | - | - | |
| | | | | Mw | - | - | |
| | | | | Mw/Mn | - | - | |
| Dilution step | Preparation amount (g) | Solvent | Ion-exchanged water | | 196 | 143 | |
| Neutralization step | Preparation amount (g) | Neutralizing agent | $LiOH{\cdot}H_2O$ | | 12.3 | 44.0 | |
| | | Solvent | Ion-exchanged water | | 203 | 383 | |

(continued)

| Comparative production example No. | | | Comparative production example 1 | Comparativ e production example 2 | Comparative production example 3 |
|---|---|---|---|---|---|
| Polymer No. | | | Polymer Q | Polymer R | Polymer S |
| Block polymer | Composition ratio (mass%) | Polymer block (A) | 100 | 98 | 98 |
| | | Polymer block (B) | - | 2 | 2 |
| | | Polymer block (C) | - | - | - |
| | Degree of neutralization of ethylenically unsaturated carboxylic acid monomer (mol%) | | 98 | 98 | 90 |
| | Aqueous solution containing the polymer | Solids concentration (mass%) | 11.86 | 10.36 | 94.4 |

Details about the compounds used in Tables 1A and 1B and Tables 2A to 2C are given below:

- AA: Acrylic acid
- ACMO: 4-acryloyl morpholine
- MEA: 2-methoxyethyl acrylate
- MA: Methyl acrylate
- EA: Ethyl acrylate
- PEA: Phenoxyethyl acrylate
- CBSTSP: 2-{[(2-carboxyethyl)sulfanylthiocarbonyl]sulfanyl}propanoic acid
- ACVA: 4,4'-azobis(4-cyanovaleric acid)
- $LiOH{\cdot}H_2O$: Lithium hydroxide monohydrate

Example 1

<Preparation of an Electrode Mixture Layer Composition (Electrode Slurry)>

Herein SiOx (0.8<x<1.2) (hereafter also referred to as "Si active material"), the surface whereof is coated with carbon by CVD, is prepared, and is mixed with graphite (by Nippon Kokuen Group, product name "CGB-10") and Si active material, the resulting mixture being used as an active material.

Using water as a dilution solvent, ion-exchanged water is added and pre-dispersion is carried out using a Disper, to a solids concentration of 56 mass% and a mass ratio of graphite: Si active material: Polymer A=90:10:3.2 (solids), followed by dispersion for 15 seconds under conditions of peripheral speed of 20 m/sec in a thin-film spin mixer (FM-56-30, by Primix Corporation), to prepare an electrode slurry. Slurry viscosity is measured for a respective electrode slurry that utilizes each polymer salt as a binder.

<Measurement of the Viscosity of the Electrode Slurry>

The viscosity of the electrode slurry obtained above was found to be 1,800 mPa s using Anton Paar's rheometer (Physica MCR301) with a CP25-5 cone plate (diameter 25 mm, cone angle 5°) at a shear rate of 60 $s^{-1}$ at 25 ° C. it was 1,800 mPa·s. The viscosity was suitable for coating.

(Production of a Negative Electrode Plate)

Next, the electrode slurry is applied onto a 20-μm thick collector (copper foil) using a variable applicator, and is dried at 100°C for 15 minutes in a ventilation dryer, to thereby form a mixture layer. The mixture layer is thereafter rolled to a thickness of 50±5 μm and a packing density of 1.60±0.10 $g/cm^3$, to obtain a negative electrode plate.

Peel strength between the mixture layer and the collector (i.e. the binding ability of the binder) of the negative electrode plate is measured.

<90° peeling strength (binding ability)>

The mixture layer surface of the negative electrode plate with an area of 100 mm × 25 mm was affixed with double-sided tape (NICHIBAN Nice Tack NW-20) to a 120 mm × 30 mm acrylic plate to prepare a sample for the peeling test. This was dried overnight at 60°C under reduced pressure and peeled at 90° at a tensile speed of 50 mm/minute at a measurement temperature of 25°C with a tensile tester (ORIENTEC Tensilon universal tester RTE-1210) to measure the peeling strength between the mixture layer and the copper foil and evaluate binding ability. The peeling strength was high at 10.0 N/m, a good result.

Examples 2 to 16, and Comparative Examples 1 to 3

Respective electrode slurries are prepared by performing the same operation as in Example 1, but herein the polymers used as the binder are as given in Table 3. The viscosity of each electrode slurry and 90° peel strength (binding ability) of the obtained negative electrode are evaluated; the results are given in Table 3.

[Table 3]

| Example · Comparative example No. | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Comparative example 1 | Comparative example 2 | Comparative example 3 |
|---|---|---|---|---|---|---|---|---|---|---|---|---|---|---|---|---|---|---|---|---|---|
| Electrode mixture layer composition (electrode slurry) | Active material | Graphite | 90 | 90 | 90 | 90 | 90 | 90 | 90 | 90 | 90 | 90 | 90 | 90 | 90 | 90 | 90 | 90 | 90 | 90 | 90 |
| | | Si active material | 10 | 10 | 10 | 10 | 10 | 10 | 10 | 10 | 10 | 10 | 10 | 10 | 10 | 10 | 10 | 10 | 10 | 10 | 10 |
| | Polymer (as-is mass ratio) | Polymer A | 29.0 | | | | | | | | | | | | | | | | | | |
| | | Polymer B | | 28.9 | | | | | | | | | | | | | | | | | |
| | | Polymer C | | | 30.0 | | | | | | | | | | | | | | | | |
| | | Polymer D | | | | 31.3 | | | | | | | | | | | | | | | |
| | | Polymer E | | | | | 29.4 | | | | | | | | | | | | | | |
| | | Polymer F | | | | | | 28.2 | | | | | | | | | | | | | |
| | | Polymer G | | | | | | | 28.4 | | | | | | | | | | | | |
| | | Polymer H | | | | | | | | 29.0 | | | | | | | | | | | |
| | | Polymer I | | | | | | | | | 26.6 | | | | | | | | | | |
| | | Polymer J | | | | | | | | | | 29.1 | | | | | | | | | |
| | | Polymer K | | | | | | | | | | | 29.4 | | | | | | | | |
| | | Polymer L | | | | | | | | | | | | 29.7 | | | | | | | |
| | | Polymer M | | | | | | | | | | | | | 27.5 | | | | | | |
| | | Polymer N | | | | | | | | | | | | | | 27.1 | | | | | |
| | | Polymer O | | | | | | | | | | | | | | | 29.7 | | | | |
| | | Polymer P | | | | | | | | | | | | | | | | 29.0 | | | |
| | | Polymer Q | | | | | | | | | | | | | | | | | 27.0 | | |
| | | Polymer R | | | | | | | | | | | | | | | | | | 30.9 | |
| | | Polymer S | | | | | | | | | | | | | | | | | | | 3.4 |
| | Ion-exchanged water | | 54.2 | 54.3 | 54.2 | 53.9 | 53.8 | 55.0 | 54.8 | 54.2 | 56.6 | 54.1 | 53.8 | 53.5 | 55.7 | 56.1 | 53.5 | 54.2 | 56.2 | 52.3 | 79.8 |
| | Solids concentration (mass%) | | 56% | 56% | 56% | 56% | 56% | 56% | 56% | 56% | 56% | 56% | 56% | 56% | 56% | 56% | 56% | 56% | 56% | 56% | 56% |
| Evaluation result | Slurry viscosity (mPa·s) | | 1,800 | 1,200 | 1,600 | 1,900 | 4,300 | 3,000 | 1,600 | 1,700 | 1,200 | 1,400 | 1,500 | 1,800 | 2,100 | 2,200 | 1,800 | 2,200 | 2,400 | 4,500 | >50,000 |
| | Binding ability | Peel strength (N/m) | 10.0 | 16.8 | 7.2 | 6.0 | 4.0 | 20.8 | 24.8 | 26.0 | 20.8 | 27.2 | 32.8 | 19.2 | 30.0 | 28.8 | 18.4 | 8.4 | 2.0 | 0.8 | 14.4 |

«Evaluation Results»

As the results of Examples 1 to 16 reveal, the secondary battery electrode mixture layer composition (electrode slurry) containing the secondary battery electrode binder of the present teaching has low slurry viscosity, and boasts excellent binding ability.

Among the examples, and focusing on the ratio of the polymer block (A) in the block polymer (Examples 1, 2 and 5), the lower the proportion of the polymer block (A), the better the results of binding ability are, within a range of the proportion of the polymer block (A) from 21 mass% (Example 2) to 79 mass% (Example 5). A high flexibility of the block polymer is deemed to be the underlying cause for this.

Focusing now on the content of structural units, in the polymer block (B), derived from an ethylenically unsaturated carboxylic acid monomer based on the totality of structural units (Examples 1, 3 and 4), the lower that content, the better the results of binding ability are, within the range of the above content from 2 mass% (Example 1) to 17 mass% (Example 4). The high flexibility of the block polymer is deemed to be the underlying cause for this.

Focusing next on the structure of the block polymer, an ABC structure (Example 6) having a polymer block (C) different from the polymer block (A) and polymer block (B) exhibits a yet better result of binding ability than an AB structure (Example 1) having the polymer block (A) and the polymer block (B). This is presumably the result of improved adsorption properties onto the active material, brought about by introducing a hydrophobic polymer block (C) that contains 50 mass% or more of a structural unit derived from an ethylenically unsaturated monomer whose solubility in 100 g of water at 20°C is 1.0 g or less.

Focusing next on the Mn of the block polymer, a value of Mn 189,000 (Example 11) yields better binding ability than a value of Mn 108,000 (Example 6). This is presumably because the higher the Mn, the better are adsorption properties onto the active material.

By contrast, binding ability is significantly poorer in a case where a block polymer (Comparative example 2) is used in which the proportion of the non-block polymer (Comparative example 1) or polymer block (A) as a binder exceeds 90 mass%. The viscosity of an electrode slurry of high solids concentration is higher in a case where a block polymer (Comparative example 3) is used that includes a structural unit derived from a crosslinkable monomer, and accordingly it is necessary to lower solids concentration, which is problematic in terms of electrode productivity, with a view to improving practical coating properties.

Industrial Applicability

The secondary battery electrode mixture layer composition (electrode slurry) containing the secondary battery electrode binder of the present teaching has a low slurry viscosity, and exhibits excellent binding ability to an electrode material in an electrode mixture layer, and excellent adhesiveness to a collector, and accordingly is expected to afford good durability (cycle characteristics). Consequently, a secondary battery provided with an electrode obtained using this binder is expected to have good durability (cycle characteristics) and should be applicable to secondary batteries for automotive use. It is also useful when using active materials containing silicon and is expected to contribute to higher capacity batteries.

The secondary battery electrode binder of the present teaching can be used favorably in non-aqueous electrolyte secondary battery electrodes in particularly and is especially useful for non-aqueous electrolyte lithium-ion secondary batteries having high energy densities.

## Claims

1. A secondary battery electrode binder comprising a block polymer that has a polymer block (A) and a polymer block (B), wherein

   the polymer block (A) contains a structural unit derived from an ethylenically unsaturated carboxylic acid monomer,
   the polymer block (B) contains less than 30 mass% of a structural unit derived from an ethylenically unsaturated carboxylic acid monomer, based on all the structural units of the polymer block (B) (different from the polymer block (A)),
   a proportion of the polymer block (A) in the block polymer is from 10 mass% to 90 mass%, and
   the block polymer contains no structural unit derived from a crosslinkable monomer.

2. The secondary battery electrode binder according to claim 1, wherein the polymer block (A) contains 50 mass% or more of the structural unit derived from the ethylenically unsaturated carboxylic acid monomer, with respect to all the structural units of the polymer block (A).

3. The secondary battery electrode binder according to claim 1 or 2, wherein the polymer block (B) contains a structural unit derived from a (meth)acrylate ester monomer.

4. The secondary battery electrode binder according to any one of claims 1 to 3, wherein the polymer block (B) contains, with respect to all the structural units thereof, 50 mass% or more of a structural unit derived from an ethylenically unsaturated monomer (hereafter referred to as "monomer (b 1)", excluding monomers classified as an ethylenically unsaturated carboxylic acid monomer) having a solubility of 20 g or less in 100 g of water at 20°C.

5. The secondary battery electrode binder according to any one of claims 1 to 4, wherein the block polymer further comprises a polymer block (C) (different from the polymer block (A) and the polymer block (B)).

6. The secondary battery electrode binder according to claim 5, wherein the polymer block (C) contains, with respect to all the structural units thereof, 50 mass% or more of a structural unit derived from an ethylenically unsaturated monomer (excluding monomers classified as an ethylenically unsaturated carboxylic acid monomer and the monomer (b 1)) having a solubility of 1.0 g or less in 100 g of water at 20°C.

7. The secondary battery electrode binder according to any one of claims 1 to 6, wherein the block polymer is a salt resulting from neutralization of 80 mol% or more of carboxyl groups of the block polymer.

8. The secondary battery electrode binder according to any one of claims 1 to 7, wherein a number-average molecular

weight of the block polymer is 50,000 or higher, as a polystyrene-basis number-average molecular weight of a methyl esterification product of carboxyl groups included in the block polymer.

**9.** A secondary battery electrode mixture layer composition, comprising the secondary battery electrode binder of any one of claims 1 to 8, an active material, and water.

**10.** A secondary battery electrode, comprising, on a collector surface, a mixture layer formed from the secondary battery electrode mixture layer composition of claim 9.

**11.** A method for producing a block polymer that is used in a secondary battery electrode binder,

the block polymer having a polymer block (A) and a polymer block (B),
the method comprising:

producing the polymer block (A) through polymerization of monomer components that include an ethylenically unsaturated carboxylic acid monomer, by living radical polymerization; and
producing the polymer block (B) (different from the polymer block (A)) through polymerization of a monomer component in the presence of the polymer block (A), with the content of an ethylenically unsaturated carboxylic acid monomer being lower than 30 mass%, wherein
a proportion of the polymer block (A) in the block polymer is from 10 mass% to 90 mass%, and

the block polymer contains no structural unit derived from a crosslinkable monomer.

**12.** The method for producing a block polymer according to claim 11, wherein the living radical polymerization method is a reversible addition-fragmentation chain transfer polymerization method (RAFT method).

**13.** The method for producing a block polymer according to claim 11 or 12, wherein the polymerization is aqueous solution polymerization.

**INTERNATIONAL SEARCH REPORT**

International application No.
**PCT/JP2021/047208**

**A. CLASSIFICATION OF SUBJECT MATTER**

***C08F 293/00***(2006.01)i; ***H01M 4/02***(2006.01)i; ***H01M 4/04***(2006.01)i; ***H01M 4/13***(2010.01)i; ***H01M 4/139***(2010.01)i; ***H01M 4/62***(2006.01)i; ***H01G 11/38***(2013.01)i
FI: H01M4/62 Z; H01M4/04 A; H01M4/139; H01M4/02 Z; H01M4/13; H01G11/38; C08F293/00

According to International Patent Classification (IPC) or to both national classification and IPC

**B. FIELDS SEARCHED**

Minimum documentation searched (classification system followed by classification symbols)

C08F293/00; H01M4/02; H01M4/04; H01M4/13; H01M4/139; H01M4/62; H01G11/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/129750 A1 (TOAGOSEI CO., LTD.) 25 June 2020 (2020-06-25) claims 1-7, paragraphs [0015], [0033], [0042], [0050], [0051], [0056], [0101] | 1-13 |
| Y | JP 2018-170218 A (GS YUASA CORP.) 01 November 2018 (2018-11-01) paragraph [0049] | 1-13 |
| Y | WO 2020/090694 A1 (TOAGOSEI CO., LTD.) 07 May 2020 (2020-05-07) paragraph [0040] | 5-6 |
| A | JP 2015-149177 A (DAI-ICHI KOGYO SEIYAKU CO., LTD.) 20 August 2015 (2015-08-20) entire text | 1-13 |
| A | WO 2019/107187 A1 (SHOWA DENKO K.K.) 06 June 2019 (2019-06-06) entire text | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2022** | **01 March 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/047208**

| Patent document cited in search report | Publication date (day/month/year) | Patent family member(s) | Publication date (day/month/year) |
|---|---|---|---|
| WO 2020/129750 A1 | 25 June 2020 | (Family: none) | |
| JP 2018-170218 A | 01 November 2018 | (Family: none) | |
| WO 2020/090694 A1 | 07 May 2020 | CN 112997341 A | |
| JP 2015-149177 A | 20 August 2015 | (Family: none) | |
| WO 2019/107187 A1 | 06 June 2019 | US 2020/0395613 A1<br>entire text<br>CN 111406331 A<br>KR 10-2020-0093537 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014065407 A
- WO 2015163302 A
- JP 2012204303 A


### Non-patent literature cited in the description


- *Chemical Review,* 2009, vol. 109, 5051-5068
- *Chemical Review,* 2006, vol. 106, 3936-3962